# EUROPEAN PATENT SPECIFICATION

(11) **EP 4 131 887 B1**
(45) Date of publication and mention of the grant of the patent: **31.07.2024**
(21) Application number: 21795670.5
(22) Date of filing: 08.04.2021
(51) Int. Cl.: G06F 16/955, H04L 67/02, H04L 67/10, H04L 65/40, H04L 67/06, H04L 67/1001, H04L 67/1036, H04L 67/562

(54) **METHOD AND SYSTEM FOR ACQUIRING MANUFACTURER USAGE DESCRIPTION (MUD) FILE, AND DEVICE**
VERFAHREN UND SYSTEM ZUR ERFASSUNG EINER HERSTELLERNUTZUNGSBESCHREIBUNGSDATEI UND VORRICHTUNG
PROCÉDÉ ET SYSTÈME D'ACQUISITION DE FICHIER DE DESCRIPTION D'UTILISATION DE FABRICANT (MUD), ET DISPOSITIF

(30) Priority: 26.04.2020 CN 202010340085
(43) Date of publication of application: 08.02.2023
(73) Proprietor: Huawei Technologies Co., Ltd., Shenzhen, Guangdong 518129 (CN)
(72) Inventor: YANG, Jie, Shenzhen, Guangdong 518129 (CN); XIA, Liang, Shenzhen, Guangdong 518129 (CN)
(74) Representative: Thun, Clemens
(86) International application number: PCT/CN2021/085863
(87) International publication number: WO 2021/218584

(56) References cited:
- CN-A- 110 770 695
- US-A1- 2018 115 611
- US-A1- 2019 319 953
- US-A1- 2019 349 858
- No further relevant documents disclosed

## Description

### TECHNICAL FIELD

This application relates to the field of communication technologies, and in particular, to a method for obtaining a manufacturer usage description (English: Manufacturer Usage Description, MUD for short) file, a device, and a system.

### BACKGROUND

With continuous improvement of digitization and intelligence, more terminal devices emerge in a network scenario, for example, terminal devices such as printers, cameras, smart LED lights, and conference room projection devices in an internet of things (English: Internet of Things, IoT for short) scenario. To constrain various terminal devices, manufacturers of terminal devices generate MUD files including information describing device types, network access permission, and the like of the terminal devices, and network devices connected to the terminal devices when the terminal devices access a network can place corresponding constraint on the terminal devices by applying the MUD files.

According to the Internet Engineering Task Force (English: Internet Engineering Task Force, IETF for short) Request For Comments (English: Request For Comments, RFC for short) 8520 "Manufacturer Usage Description Specification", the manufacturer of the terminal device stores the generated MUD file in a MUD file server of the manufacturer, and stores, in the terminal device, only a uniform resource locator (English: Uniform Resource Locator, URL for short) (which is referred to as a MUD URL below) corresponding to the MUD file. When the terminal device needs to access the network, the terminal device sends the MUD URL to the network device connected to the terminal device. The terminal device sends the MUD URL to a MUD control management device via the network device. The MUD control management device obtains the corresponding MUD file from the MUD file server based on the MUD URL, and maps content of the MUD file to a network policy for constraining network behavior of the terminal device.

Further, US 2018/115611 A1 refers to techniques in which one or more network devices can use information provided by a special purpose network connected device to retrieve a usage profile (i.e., configuration file) associated with the special purpose network connected device. The retrieved usage profile, which includes/describes preselected (predetermined) usage descriptions associated with the special purpose network connected device, can then be used to configure one or more network devices. For example, the predetermined usage descriptions associated with the special purpose network connected device can be instantiated and enforced at a network device or the predetermined usage descriptions can be used for auditing the special purpose network connected device (e.g., monitoring of traffic within the network).

It can be seen that, due to a limitation of the current RFC 8520 protocol, the MUD control management device can obtain, based on a MUD URL in the terminal device, a MUD file from only the MUD file server corresponding to the manufacturer of the terminal device, and cannot obtain a MUD file from a plurality of MUD file servers. On this basis, a mechanism for obtaining a MUD file is urgently required for the MUD control management device to obtain the MUD file from the plurality of MUD file servers

### SUMMARY

On this basis, embodiments of this application provide a method for obtaining a manufacturer usage description MUD file, a device, and a system, to obtain a MUD file from a plurality of MUD file servers, so as to accurately constrain a terminal device based on the obtained MUD file.

According to a first aspect, an embodiment of this application provides a method for obtaining a MUD file according to claim 1.

The method is implemented by a MUD control management device. For example, the method may include receiving a MUD URL request message sent by a terminal device; and obtaining at least one MUD file from a plurality of MUD file servers based on a target obtaining policy corresponding to the terminal device. It can be learned that in embodiments of this application, because the MUD control management device has target obtaining policies corresponding to terminal devices, the MUD control management device can obtain the MUD file from the plurality of MUD file servers based on the target obtaining policy corresponding to the terminal device. Therefore, a MUD file of the terminal device is obtained from the plurality of MUD file servers in a scenario in which a plurality of MUD files are distributed on the plurality of MUD file servers, so that network behavior of the terminal device is more accurately constrained.

In an example, the MUD control management device may store a first mapping relationship between the target obtaining policy and a MUD URL that is provided by a manufacturer of the terminal device for the terminal device. In this case, embodiments of this application may further include: The MUD control management device obtains, from the MUD URL request message, the MUD URL provided by the manufacturer of the terminal device for the terminal device, and determines that the MUD URL matches the first mapping relationship, to further obtain the target obtaining policy based on the first mapping relationship.

In another example, the MUD control management device may also store a second mapping relationship between device information of the terminal device and the target obtaining policy. In this case, embodiments of this application may further include: The MUD control management device obtains the device information of the terminal device from the MUD URL request message, and determines that the device information matches the second mapping relationship, to further obtain the target obtaining policy based on the second mapping relationship. The device information of the terminal device may include, for example, one or more of the following: a device identifier of the terminal device; a device type of the terminal device; a network segment to which the terminal device belongs; an internet protocol (English: Internet Protocol, IP for short) address of the terminal device; a media access control (English: Media Access Control, MAC for short) address of the terminal device; or information about the manufacturer of the terminal device.

In some possible implementations, there is only one obtaining policy in the MUD control management device. In this case, when receiving a MUD URL request message sent by any terminal device, the MUD control management device uses the unique obtaining policy as the target obtaining policy, and obtains the at least one MUD file from the plurality of MUD file servers based on the target obtaining policy.

In some other possible implementations, there are a plurality of obtaining policies in the MUD control management device. In this case, embodiments of this application may further include: The MUD control management device determines the target obtaining policy from a plurality of preconfigured obtaining policies. The plurality of obtaining policies may be specifically locally configured and stored in the MUD control management device, or may be obtained by the MUD control management device from another device.

The obtaining policy (including the target obtaining policy) indicates a rule for obtaining a MUD file from the plurality of MUD file servers. In a case, in an example, the target obtaining policy may include: redirecting, based on the MUD URL provided by the manufacturer of the terminal device for the terminal device, a first MUD file server corresponding to the MUD URL to at least one target MUD file server, and obtaining the MUD file in the at least one target MUD file server, where the plurality of MUD file servers include the first MUD file server, and the at least one target MUD file server includes a second MUD file server. Alternatively, in another case, in an example, the target obtaining policy may include: globally updating an obtained MUD file to a MUD file that is latest read from a MUD file server in a sequential reading principle. Alternatively, in still another case, in an example, the target obtaining policy may include: reading and storing a plurality of MUD files in the plurality of MUD file servers in sequence. Alternatively, in yet another case, in an example, the target obtaining policy may include: pre-designating at least one target MUD file server from the plurality of MUD file servers, and obtaining the MUD file in the at least one target MUD file server.

In an example, that the MUD control management device obtains at least one MUD file from a plurality of MUD file servers based on a target obtaining policy corresponding to the terminal device may specifically include: first determining the at least one target MUD file server from the plurality of MUD file servers based on the target obtaining policy; and then obtaining the at least one MUD file from the at least one target MUD file server. It should be noted that the target MUD file server is one of the plurality of MUD file servers. The at least one target MUD file server may be all of the plurality of MUD file servers, or the at least one target MUD file server may be a part of the plurality of MUD file servers.

In addition, in an example, the target obtaining policy may alternatively include: redirecting, based on the MUD URL provided by the manufacturer of the terminal device for the terminal device, the first MUD file server corresponding to the MUD URL to at least one target MUD URL, and obtaining the at least one MUD file from the plurality of MUD file servers based on the at least one target MUD URL. A quantity of the at least one target MUD URL is less than or equal to a quantity of all MUD file servers included in the plurality of MUD file servers. That the MUD control management device obtains at least one MUD file from a plurality of MUD file servers based on a target obtaining policy corresponding to the terminal device may specifically include: determining, based on the target obtaining policy, the at least one target MUD URL from a plurality of MUD URLs corresponding to the plurality of MUD file servers; and obtaining the at least one MUD file from the at least one target MUD URL. It should be noted that the target MUD URL is a MUD URL that is of the plurality of MUD URLs in the plurality of MUD file servers and that corresponds to the stored MUD file of the terminal device. The at least one target MUD URL may be all of the plurality of MUD URLs, or the at least one target MUD URL may be a part of the plurality of MUD URLs.

In some specific implementations, after the MUD control management device obtains the at least one MUD file according to the method provided in embodiments of this application, embodiments of this application may further include: The MUD control management device processes the at least one MUD file to obtain a target MUD file, where the target MUD file is for constraining network behavior of the terminal device. In one case, when the at least one MUD file includes only one MUD file, the MUD control management device may directly use the unique obtained MUD file as the target MUD file, and constrain the network behavior of the terminal device based on the target MUD file. In another case, when the at least one MUD file includes at least two MUD files, the MUD control management device needs to process the at least two MUD files to obtain the target MUD file, and constrains the network behavior of the terminal device based on the target MUD file.

In an example, a process of processing the at least one MUD file to obtain the target MUD file may include, for example, a process of determining a device description entry included in the target MUD file. In one case, all device description entries included in the obtained MUD file may be used as device description entries in the target MUD file. Assuming that the at least one MUD file includes a first MUD file and a second MUD file, the first MUD file includes a first device description entry of the terminal device, the second MUD file includes a second device description entry of the terminal device, and the first device description entry is different from the second device description entry, the target MUD file includes the first device description entry and the second device description entry. In another case, a device description entry included in all the obtained MUD files may alternatively be used as a device description entry in the target MUD file. According to the invention, the at least one MUD file includes a first MUD file and a second MUD file, the first MUD file includes a first device description entry and a second device description entry that are of the terminal device, the second MUD file includes the second device description entry of the terminal device, and the first device description entry is different from the second device description entry, the target MUD file includes the second device description entry.

In addition, when a plurality of MUD files of the obtained at least one MUD file include a same device description entry, but MUD information of the same device description entry is different, a process of processing the at least one MUD file to obtain the target MUD file may include, for example, a process of determining MUD information of the device description entry in the target MUD file. In an example, embodiments of this application may further include: obtaining, based on a target MUD file processing policy corresponding to the terminal device, MUD information that is for describing the first device description entry and that is in the target MUD file. The first device description entry is the same device description entry included in the plurality of MUD files of the obtained at least one MUD file.

The target MUD file processing policy indicates a rule of processing the obtained at least one MUD file to obtain the target MUD file. In one case, in an example, the target MUD file processing policy may include: when the plurality of MUD files are obtained in sequence, using MUD information that is for describing the first device description entry and that is in the latest obtained MUD file as the MUD information that is for describing the first device description entry and that is in the target MUD file. Alternatively, in another case, in an example, the target MUD file processing policy may include: when there is MUD information for describing the first device description entry in the plurality of MUD files, using MUD information that is for describing the first device description entry and that is in a specified MUD file (for example, a MUD file provided by the manufacturer of the terminal device) as the MUD information that is for describing the first device description entry and that is in the target MUD file. Alternatively, in still another case, in an example, the target MUD file processing policy may include: when there is MUD information for describing the first device description entry in the plurality of MUD files, processing the MUD information of the first device description entry by using a specified operation, and using an operation result as the MUD information that is of the first device description entry and that is in the target MUD file. Alternatively, in yet another case, in an example, the target MUD file processing policy may include: when the plurality of MUD files include first MUD information and second MUD information that are for describing the first device description entry, obtaining the first MUD information and the second MUD information, and associating, in the target MUD file, the first MUD information with a first service and the second MUD information with a second service.

It can be learned that according to the method provided in embodiments of this application, in a scenario in which a plurality of MUD files are distributed on different MUD file servers, when the terminal device accesses a network, the MUD control management device may obtain the at least one MUD file from the plurality of MUD file servers based on the target obtaining policy corresponding to the terminal device, so as to obtain the MUD file from the plurality of MUD file servers. In addition, to more accurately constrain the terminal device based on the obtained at least one MUD file, and avoid a constraint conflict, on the network behavior of the terminal device, caused by different MUD information of the same device description entry in the plurality of obtained MUD files, the MUD control management device can further process the obtained at least one MUD file to determine the target MUD file, so as to accurately constrain the network behavior of the terminal device based on the processed target MUD file.

According to a second aspect, an embodiment of this application further provides a MUD control management device. The MUD control management device includes a transceiver unit and a processing unit. The transceiver unit is configured to perform receiving and sending operations in the method provided in the first aspect. The processing unit is configured to perform an operation other than the receiving and sending operations in the method provided in the first aspect. For example, when the MUD control management device performs the method provided in the first aspect, the transceiver unit may be configured to receive a MUD URL request message sent by a terminal device, and the processing unit may be configured to obtain at least one MUD file from a plurality of MUD file servers based on a target obtaining policy corresponding to the terminal device.

According to a third aspect, an embodiment of this application further provides a MUD control management device. The MUD control management device includes a communication interface and a processor. The communication interface is configured to perform receiving and sending operations in the method provided in the first aspect. The processor is configured to perform other operation other than the receiving and sending operations in the method provided in any one of the first aspect or the possible implementations of the first aspect.

According to a fourth aspect, an embodiment of this application further provides a MUD control management device. The MUD control management device includes a memory and a processor. The memory includes computer-readable instructions. The processor communicating with the memory is configured to execute the computer-readable instructions, so that the MUD control management device is configured to perform the method provided in any one of the first aspect or the possible implementations of the first aspect.

According to a fifth aspect, an embodiment of this application further provides a communication system. The communication system includes a MUD control management device, a terminal device, and a plurality of MUD file servers. The MUD control management device may be specifically the MUD control management device provided in the second aspect, the third aspect, or the fourth aspect.

According to a sixth aspect, an embodiment of this application further provides a communication system. The communication system includes a MUD control management device, a terminal device, and a plurality of MUD file servers. The plurality of MUD file servers include a first MUD file server, and the first MUD file server is configured to store a first MUD file. The plurality of MUD file servers include a second MUD file server, and the second MUD file server is configured to store a second MUD file. In addition, the plurality of MUD file servers may further include another MUD file server. For example, the plurality of MUD file servers may further include a third MUD file server, and the third MUD file server is configured to store a third MUD file.

In the communication system provided in the fifth aspect or the sixth aspect, the following related operations may be further specifically performed.

The terminal device in the communication system is configured to send a MUD uniform resource locator URL request message to the MUD control management device; and the MUD control management device is configured to obtain at least one MUD file from the plurality of MUD file servers based on a target obtaining policy corresponding to the terminal device. For example, the at least one MUD file may include at least one of the following MUD files: the first MUD file, the second MUD file, and the third MUD file.

In some possible implementations, the MUD control management device stores a first mapping relationship between the target obtaining policy and a MUD URL that is provided by a manufacturer of the terminal device for the terminal device. In this case, the MUD control management device in the communication system is further configured to obtain the target obtaining policy based on the first mapping relationship.

In some other possible implementations, the MUD control management device stores a second mapping relationship between device information of the terminal device and the target obtaining policy. In this case, the MUD control management device in the communication system is further configured to obtain the target obtaining policy based on the second mapping relationship. The device information of the terminal device includes one or more of the following: a device identifier of the terminal device; a device type of the terminal device; a network segment to which the terminal device belongs; an internet protocol IP address of the terminal device; a media access control MAC address of the terminal device; or information about the manufacturer of the terminal device.

In still some possible implementations, the MUD control management device in the communication system is further configured to determine the target obtaining policy from a plurality of preconfigured obtaining policies. The plurality of obtaining policies may be locally configured and stored in the MUD control management device, or may be obtained by the MUD control management device from another device and stored.

In still some possible implementations, that the MUD control management device in the communication system is configured to obtain at least one MUD file from the plurality of MUD file servers 1003 based on a target obtaining policy corresponding to the terminal device may specifically include: determining at least one target MUD file server from the plurality of MUD file servers based on the target obtaining policy; and obtaining the at least one MUD file from the at least one target MUD file server.

The target obtaining policy includes: redirecting, based on the MUD URL provided by the manufacturer of the terminal device for the terminal device, the first MUD file server corresponding to the MUD URL to the at least one target MUD file server, and obtaining the MUD file in the at least one target MUD file server, where the plurality of MUD file servers include the first MUD file server, and the at least one target MUD file server includes the second MUD file server; globally updating an obtained MUD file to a MUD file that is latest read from a MUD file server in a sequential reading principle; reading and storing a plurality of MUD files in the plurality of MUD file servers in sequence; or pre-designating the at least one target MUD file server from the plurality of MUD file servers, and obtaining the MUD file in the at least one target MUD file server.

It should be noted that the at least one target MUD file server may be all of the plurality of MUD file servers, or the at least one target MUD file server may be a part of the plurality of MUD file servers.

In some possible implementations, the MUD control management device in the communication system is further configured to process the at least one MUD file to obtain a target MUD file, where the target MUD file is for constraining network behavior of the terminal device.

In an example, the at least one MUD file includes the first MUD file and the second MUD file, the first MUD file includes a first device description entry of the terminal device, the second MUD file includes a second device description entry of the terminal device, the first device description entry is different from the second device description entry, and the target MUD file includes the first device description entry and the second device description entry.

In a possible implementation, the MUD control management device in the communication system is further configured to obtain, based on a target MUD file processing policy corresponding to the terminal device, MUD information that is for describing the first device description entry and that is in the target MUD file. The target MUD file processing policy includes: when the plurality of MUD files are obtained in sequence, using MUD information that is for describing the first device description entry and that is in the latest obtained MUD file as the MUD information that is for describing the first device description entry and that is in the target MUD file; when there is MUD information for describing the first device description entry in all the plurality of MUD files, using MUD information that is for describing the first device description entry and that is in a MUD file provided by the manufacturer of the terminal device as the MUD information that is for describing the first device description entry and that is in the target MUD file; or when the plurality of MUD files include first MUD information and second MUD information that are for describing the first device description entry, obtaining the first MUD information and the second MUD information, and associating, in the target MUD file, the first MUD information with a first service and the second MUD information with a second service.

It should be noted that for related descriptions and achieved effects of specific implementations of the communication system provided in the fifth aspect and the sixth aspect, refer to related descriptions of the method provided in any one of the first aspect or the possible implementations of the first aspect.

According to a seventh aspect, an embodiment of this application further provides a computer-readable storage medium. The computer-readable storage medium stores instructions. When the instructions are run on a computer, the computer is enabled to perform the method provided in any one of the first aspect or the possible implementations of the first aspect.

According to an eighth aspect, an embodiment of this application further provides a computer program product, including a computer program or computer-readable instructions. When the computer program or the computer-readable instructions are run on a computer, the computer is enabled to perform the method provided in any one of the first aspect or the possible implementations of the first aspect.

### BRIEF DESCRIPTION OF DRAWINGS

FIG. 1 is a schematic diagram of a framework of a network 100 in an application scenario according to an embodiment of this application;
FIG. 2 is a schematic diagram of a framework of a communication system 200 according to an embodiment of this application;
FIG. 3 is a signaling flowchart of a method 100 for obtaining a MUD file according to an embodiment of this application;
FIG. 4 is a signaling flowchart of a method 200 for obtaining a MUD file according to an embodiment of this application;
FIG. 5 is a method flowchart of a method 300 for obtaining a MUD file according to an embodiment of this application;
FIG. 6 is a schematic diagram of a structure of a MUD control management device 600 according to an embodiment of this application;
FIG. 7 is a schematic diagram of a structure of another MUD control management device 700 according to an embodiment of this application;
FIG. 8 is a schematic diagram of a structure of still another MUD control management device 800 according to an embodiment of this application;
FIG. 9 is a schematic diagram of a structure of a communication system 900 according to an embodiment of this application; and
FIG. 10 is a schematic diagram of a structure of another communication system 1000 according to an embodiment of this application.

### DESCRIPTION OF EMBODIMENTS

The following describes technical solutions of embodiments in this application with reference to accompanying drawings. A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Ordinal numbers such as "1", "2", "3", "first", "second", and "third" in this application are used to distinguish between a plurality of objects, but are not used to limit a sequence of the plurality of objects.

"A and/or B" mentioned in this application should be understood as including the following cases: Only A is included, only B is included, or both A and B are included

For related content of the MUD file in this application, refer to related descriptions of the Internet Engineering Task Force (English: Internet Engineering Task Force, IETF for short) Request For Comments (English: Request For Comments, RFC for short) 8520 "Manufacturer Usage Description Specification".

To constrain various terminal devices that are on a network, a manufacturer usually generates corresponding MUD files for the terminal devices before delivery. Network behavior of the terminal device is constrained based on MUD information corresponding to a device description entry included in the MUD file. The device description entry is specifically for describing the network behavior related to the terminal device. The device description entry may include, for example, a device type, network access permission, defined bandwidth, and a network priority of the terminal device. The MUD information corresponding to the device description entry is a specific description of the device description entry. For example, MUD information of a device description entry of the defined bandwidth may be a value of the bandwidth For another example, MUD information of a device description entry of the network access permission may be network access permission assigned to the terminal device.

In embodiments of this application, the terminal device may be any device that needs to access a network through a network device, and may be, for example, a personal computer, a printer, a camera, a smart LED lamp, or a conference room projection device.

The RFC 8520 is a set of protocol frameworks based on the MUD file. According to the RFC 8520, to save storage space on the terminal device, generally, the manufacturer of the terminal device stores the generated MUD file in a MUD file server corresponding to the manufacturer, and stores, in the terminal device, only a MUD URL corresponding to the MUD file. When the terminal device accesses the network, the terminal device may send the MUD URL to the network device connected to the terminal device. The network device sends the MUD URL to a MUD control management device. The MUD control management device obtains the corresponding MUD file from the MUD file server of the manufacturer based on the MUD URL, and maps content of the MUD file to a network policy for constraining the network behavior of the terminal device.

It should be noted that, in embodiments of this application, the MUD control management device is an absolutely trusted and secure device by default. According to usage in the RFC 8520, the MUD control management device may be a MUD manager (which may also be referred to as a MUD controller).

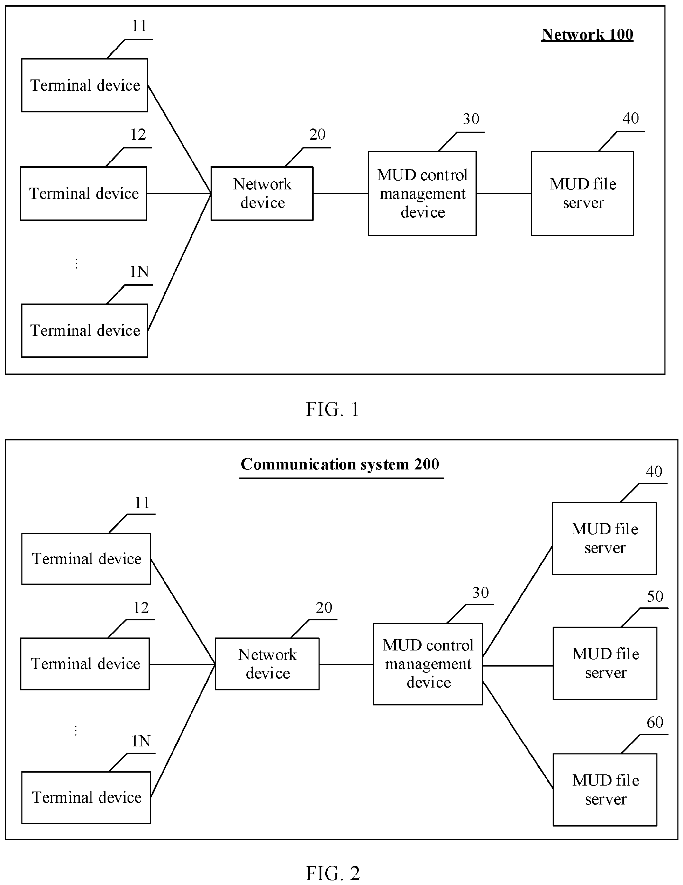

The scenario shown in FIG. 1 is used as an example to describe a current manner of obtaining a MUD file.

FIG. 1 is a schematic diagram of a network architecture of a possible scenario according to an embodiment of this application. Refer to FIG. 1. A network 100 includes a terminal device 11, a terminal device 12,..., a terminal device 1N (where N is an integer greater than 1), a network device 20, a MUD control management device 30, and a MUD file server 40. The network device 20 may be an access device used by the terminal device 11, the terminal device 12, ..., the terminal device 1N (where N is an integer greater than 1) to access the network. For example, the network device 20 may be a switch, a router, or a firewall. The MUD control management device 30 may be any physical device that can implement a MUD manager function, or may be a functional module that can implement the MUD manager function. As the functional module, the MUD control management device 30 may be integrated into any network device (for example, the network device 20). For example, when the MUD control management device 30 is integrated into the network device 20 as the functional module, the MUD control management device 30 can exchange data with the network device 20, and can also interact with each terminal device through a communication interface of the network device 20, to implement a function of constraining the corresponding terminal device based on each MUD file. The MUD control management device 30 can obtain the MUD file, obtain a corresponding network policy based on the MUD file, and configure the network policy on the network device 20, so that the network device 20 implements a constraint on the corresponding terminal device based on the network policy. The MUD file server 40 may be a server used by a manufacturer to carry the corresponding MUD file. The MUD file stored in the MUD file server 40 corresponds to the MUD URL stored in the terminal device, and the corresponding MUD file can be obtained from the MUD file server 40 based on the MUD URL provided by the terminal device.

In an example, the manufacturer may directly store the MUD URL in each terminal device. In this case, the terminal device 11 is used as an example, and a process of obtaining the MUD file may include, for example, the following steps. S11: When the terminal device 11 accesses the network, the terminal device 11 sends a message to the network device 20, where the message carries a MUD URL x, and the message may be, for example, a link layer discovery protocol (English: Link Layer Discovery Protocol, LLDP for short) request message or a dynamic host configuration protocol (English: Dynamic Host Configuration Protocol, DHCP for short) request message. S12: The network device 20 obtains the MUD URL x, and directly or indirectly sends the MUD URL x to the MUD control management device 30. S13: The MUD control management device 30 accesses the MUD file server 40 based on the MUD URL x, and obtains a MUD file 1 corresponding to the MUD URL x. S14: The MUD control management device 30 obtains a network policy 1 based on the MUD file 1, and applies the network policy 1 to the network device 20. S15: The network device 20 to which the network policy 1 is applied constrains network behavior of the terminal device 11. The network behavior may include, for example, one or more of network access permission, defined bandwidth, or a network priority of the terminal device 11.

It can be learned from the example that, currently, due to a limitation of the RFC 8520 protocol, a MUD control management device can obtain, based on an obtained MUD URL, a MUD file from only a MUD file server corresponding to a manufacturer of a terminal device, and further constrain network behavior of the terminal device based on the MUD file generated by the manufacturer.

However, in a process from producing the terminal device by the manufacturer to using the terminal device by a user, many production (or deployment) phases may need to impose a specific limitation on the network behavior of the terminal device, and generate corresponding MUD files. For example, after the terminal device is produced by the manufacturer, the terminal device may be commercially deployed on a client side after a plurality of intermediate production procedures of a plurality of intermediate vendors are performed on the terminal device. In this case, the intermediate vendors or the intermediate production procedures may provide corresponding MUD files for the terminal device as required. For another example, after the terminal device is commercially deployed on a client side, security hardening by an information security department, operation and maintenance enhancement by an Internet technology (English: Internet Technology, IT for short) maintenance department, or the like may be performed on the terminal device. In this case, during security hardening or operation and maintenance enhancement, a corresponding MUD file may be provided for the terminal device as required. In this way, the network architecture shown in FIG. 1 cannot meet a requirement for obtaining a MUD file when a plurality of production (or deployment) phases generate MUD files for one terminal device.

On this basis, an embodiment of this application provides a communication system. The communication system may include a terminal device, a plurality of MUD file servers, and a MUD control management device. The MUD control management device can communicate with the terminal device, or the MUD control management device may separately communicate with the plurality of MUD file servers. Each of the plurality of MUD file servers is configured to store a MUD file provided for the terminal device in one or more production (or deployment) phases. For example, the communication system includes n MUD file servers, and each MUD file server includes one MUD file of the terminal device.

FIG. 2 is a schematic diagram of an architecture of a communication system 200 according to an embodiment of this application. Refer to FIG. 2. In addition to the devices in the network 100, the communication system 200 further includes a MUD file server 50 and a MUD file server 60. In addition to the MUD file 1 generated by a manufacturer for the terminal device 11, a MUD file corresponding to the terminal device 11 further includes a MUD file 2 and a MUD file 3. The MUD file 1 is stored in the MUD file server 40 corresponding to the manufacturer, and corresponds to the MUD URL x stored in the terminal device 11. The MUD file 2 may be stored in the MUD file server 50 corresponding to an intermediate integrator. The MUD file 3 may be stored in the MUD file server 60 corresponding to a client side. It should be noted that device description entries included in a plurality of MUD files corresponding to one terminal device may be the same or different, and MUD information of a same device description entry in different MUD files may be the same or different. A MUD file generated in a subsequent production (or deployment) phase may be obtained by performing an addition operation, a deletion operation, or a modification operation on a device description entry in a MUD file generated in a previous generation (or deployment) phase. For example, in the scenario shown in FIG. 2, the MUD file 1 includes a device description entry 1 and a device description entry 2, MUD information of the device description entry 1 is a1, and MUD information of the device description entry 2 is b 1. The MUD file 2 may be obtained by adding a device description entry 3 to the MUD file 1, and modifying the MUD information of the device description entry 1. For example, the MUD file 2 includes the device description entry 1, the device description entry 2, and a device description entry 3, where the MUD information of the device description entry 1 is a2, the MUD information of the device description entry 2 is b1, and MUD information of the device description entry 3 is c1. The MUD file 3 may be obtained by deleting the device description entry 1 and the device description entry 2 from the MUD file 2, and modifying the MUD information of the device description entry 3. For example, the MUD file 3 includes the device description entry 3, and the MUD information of the device description entry 3 is c2.

It can be learned that in the foregoing communication system provided in embodiments of this application, a plurality of MUD files of one terminal device are distributed on a plurality of MUD file servers, and these MUD files are network behavior constraints imposed on the terminal device in each production (or deployment) phase. In this way, by using a network framework in which the plurality of MUD files are distributed on the plurality of MUD file servers in the communication system, it is possible that all production (or deployment) phases of the terminal device generate a plurality of different MUD files for the terminal device.

For ease of understanding a scenario similar to that shown in FIG. 2 in which a plurality of MUD files are distributed on a plurality of MUD file servers, the following uses an actual scenario for description. It is assumed that a company A purchases 50 conference terminals from a vendor B, specifies a company C to install and deliver the 50 conference terminals, and performs a secure and fixed operation on the 50 conference terminals. In this case, the 50 conference terminals correspond to terminal devices in the network 200, the vendor B corresponds to the manufacturer, the company C corresponds to the intermediate integrator, and the company A corresponds to the client side. The company A, company B, and company C respectively provide the 50 conference terminals with MUD files: the MUD file 1, the MUD file 2, and the MUD file 3. The MUD files provided by company A, company B, and company C for the 50 conference terminals are stored on respective servers. The server of the company A corresponds to the MUD file server 60 in the network 200, the server of the company B corresponds to the MUD file server 40 in the network 200, and the server of the company C corresponds to the MUD file server 50 in the network 200. The MUD file 1 represents a constraint of a manufacturer of a terminal device on network behavior of the terminal device, for example, whether the vendor B allows a conference terminal to access an external conference. The MUD file 2 represents a constraint of an intermediate integrator of the terminal device on network behavior of the terminal device, where, for example, the company C filters some keywords output by the conference terminal. The MUD file 3 represents a constraint of a user side of the terminal device on network behavior of the terminal device, where, for example, the company A allows which conference terminals to access the external conference.

In the communication system provided in embodiments of this application, to accurately constrain network behavior of a terminal device, a device description entry and MUD information of the device description entry in each MUD file of the terminal device need to be comprehensively considered. However, in a current RFC 8520 protocol, a MUD control management device obtains, by default based on an obtained MUD URL, a MUD file from a MUD file server corresponding to a manufacturer of a terminal device, and a mechanism of obtaining a MUD file from a plurality of MUD file servers is not supported. Consequently, when a plurality of MUD files are distributed on a plurality of MUD file servers, the MUD file cannot be obtained from the plurality of MUD file servers for the terminal device, and network behavior of the terminal device cannot be accurately constrained.

On this basis, in embodiments of this application, a method for obtaining a manufacturer usage description MUD file is provided. In the method, in a scenario in which a plurality of MUD files are distributed on a plurality of MUD file servers, a MUD file can be obtained from the plurality of MUD file servers. During specific implementation, in the communication system 200 shown in FIG. 2, after receiving a MUD URL request message of a terminal device, a MUD control management device can obtain at least one MUD file from a plurality of MUD file servers based on a target obtaining policy corresponding to the terminal device. It can be learned that in the method for obtaining a MUD file provided in embodiments of this application, because the MUD control management device has target obtaining policies corresponding to terminal devices, the MUD control management device can obtain the MUD file from the plurality of MUD file servers based on the target obtaining policy. Therefore, the MUD file of the terminal device is obtained from the plurality of MUD file servers in the scenario in which the plurality of MUD files are distributed on the plurality of MUD file servers, so that network behavior of the terminal device is more accurately constrained.

It should be noted that the target obtaining policy in the MUD control management device indicates a rule for obtaining the at least one MUD file from the plurality of MUD file servers. In one case, the target obtaining policy may be configured and stored by a user on the MUD control management device. In another case, the target obtaining policy may alternatively be obtained by the MUD control management device from another device and stored. In the MUD control management device, one terminal device corresponds to only one target obtaining policy. However, one target obtaining policy may correspond to at least one terminal device. In other words, target obtaining policies corresponding to different terminal devices may be the same or different.

The MUD control management device may store a first mapping relationship between the target obtaining policy and a MUD URL provided by a manufacturer of the terminal device for the terminal device, so that after obtaining the MUD URL of the terminal device, the MUD control management device determines, from the first mapping relationship, the target obtaining policy matching the MUD URL, so as to obtain the at least one MUD file from the plurality of MUD file servers based on the target obtaining policy. Alternatively, the MUD control management device may store a second mapping relationship between the target obtaining policy and device information of the terminal device, so that after obtaining the device information of the terminal device, the MUD control management device determines, from the second mapping relationship, the target obtaining policy matching the device information of the terminal device, to obtain the at least one MUD file from the plurality of MUD file servers based on the target obtaining policy. The device information may be a unique identifier of the terminal device, for example, a device identifier, an IP address, or a MAC address of the terminal device, or the device information may be a batch identifier of the terminal device, for example, a device type of the terminal device, a network segment to which the terminal device belongs, or information about the manufacturer of the terminal device. For example, the device information is the device type of the terminal device. Each device type corresponds to only one target obtaining policy, and one target obtaining policy may correspond to at least one device type. In this way, terminal devices of a same device type definitely correspond to a same target obtaining policy, and terminal devices of different device types may correspond to a same target obtaining policy or may correspond to different target obtaining policies.

The communication system 200 shown in FIG. 2 is still used as an example. It is assumed that the MUD control management device 30 pre-stores three mapping relationships between device information and an obtaining policy, and the device information is a device type. The three mapping relationships are a mapping relationship 1: device type A-obtaining policy 1 "Read and store a plurality of MUD files in a plurality of MUD file servers in sequence", a mapping relationship 2: device type B-obtaining policy 2 "Pre-specify the MUD file server 40 from the plurality of MUD file servers, and obtain the MUD file in the MUD file server 40", and a mapping relationship 3: device type C-obtaining policy 3 "Pre-specify the MUD file server 60 from the plurality of MUD file servers, and obtain the MUD file in the MUD file server 60".

In specific implementation, a process of obtaining a MUD file may include the following steps. S21: When the terminal device 11 accesses a network, the terminal device 11 sends a MUD URL request message to the MUD control management device 30, where the MUD URL request message carries a MUD URL x. S22: The MUD control management device 30 parses the MUD URL request message to obtain a device type A of the terminal device 11. S23: The MUD control management device 30 determines, from the three prestored mapping relationships, that the device type A of the terminal device 11 corresponds to the mapping relationship 1, and uses the obtaining policy 1 in the mapping relationship 1 as a target obtaining policy. S24: The MUD control management device 30 determines, based on the obtaining policy 1, that corresponding MUD files need to be respectively obtained from the MUD file server 40, the MUD file server 50, and the MUD file server 60. S25: The MUD control management device 30 obtains the MUD file 1 from the MUD file server 40. S26: The MUD control management device 30 obtains the MUD file 2 from the MUD file server 50. S27: The MUD control management device 30 obtains the MUD file 3 from the MUD file server 60. S28: The MUD control management device 30 determines a corresponding network policy 2 based on the MUD file 1, the MUD file 2, and the MUD file 3, and applies the network policy 2 to the network device 20, so that the network device 20 constrains network behavior of the terminal device 11. S25, S26, and S27 may be performed sequentially or simultaneously. A specific execution sequence is not limited.

In this way, an obtaining policy is configured in the MUD control management device 30, so that in the scenario in which the plurality of MUD files are distributed on the plurality of MUD file servers, the MUD file can be obtained from the plurality of MUD file servers, thereby implementing an accurate constraint on the network behavior of the terminal device.

In another example, if the three mapping relationships pre-stored on the MUD control management device 30 are updated depending on an actual requirement, an updated mapping relationship 1 is specifically: device type A-obtaining policy 4 "Redirect, based on the MUD URL x provided by the manufacturer of the terminal device for the terminal device, the MUD file server 40 corresponding to the MUD URL x to the MUD file server 50 and the MUD file server 60". In specific implementation, in addition to the foregoing S21 and S22, a process of obtaining a MUD file further includes the following steps. S23': The MUD control management device 30 determines, from the three prestored mapping relationships, that the device type A of the terminal device 11 corresponds to the mapping relationship 1, and uses the obtaining policy 4 in the mapping relationship 1 as a target obtaining policy. S24': The MUD control management device 30 determines, based on the obtaining policy 4 in the mapping relationship 1, that corresponding MUD files need to be obtained from the MUD file server 50 and the MUD file server 60. S26: The MUD control management device 30 obtains the MUD file 2 from the MUD file server 50. S27: The MUD control management device 30 obtains the MUD file 3 from the MUD file server 60. S28': The MUD control management device 30 determines a corresponding network policy 3 based on the MUD file 2 and the MUD file 3, and applies the network policy 3 to the network device 20, so that the network device 20 constrains network behavior of the terminal device 11. S26 and S27 may be performed sequentially or simultaneously. A specific execution sequence is not limited.

In this way, different obtaining policies are flexibly defined in the MUD control management device 30 based on actual requirements, so that it is possible to obtain different MUD files in different phases based on different requirements, and network behavior of the terminal device can be flexibly constrained.

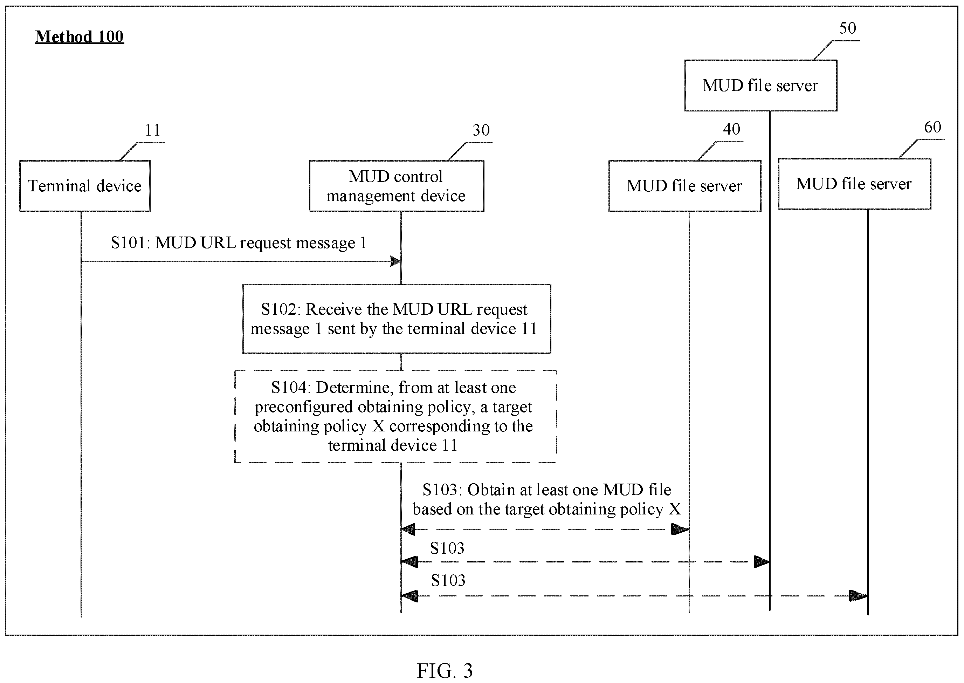

It should be noted that, for specific implementation details and effects, refer to related descriptions in the following method 100 shown in FIG. 3. Details are not described herein.

It may be understood that, the scenario is merely a scenario example provided in embodiments of this application, but embodiments of this application are not limited to the scenario.

With reference to FIG. 3, the communication system 200 shown in FIG. 2 is used as an example below, and specifically, the terminal device 11 in the communication system 200 is used as an example to describe a method 100 for obtaining a MUD file provided in this embodiment of this application.

FIG. 3 shows a method 100 for obtaining a MUD file according to an embodiment of this application. The method 100 may include the following S101 to S103.

S101: The terminal device 11 sends a MUD URL request message 1 to a MUD control management device 30.

S102: The MUD control management device 30 receives the MUD URL request message 1 sent by the terminal device 11.

When the terminal device 11 needs to access a network, the terminal device 11 may perform S101 to send the MUD URL request message 1 to the MUD control management device 30. The MUD URL request message 1 is used to request the MUD control management device 30 to obtain a MUD file of the terminal device 11, so as to subsequently constrain network behavior of the terminal device 11 based on the MUD file. The MUD URL request message 1 carries a MUD URL x provided for the terminal device 11 by a manufacturer of the terminal device 11.

In an example, the MUD URL request message 1 may be an 802.1X request message. In this case, S101 may specifically include: The terminal device 11 sends the 802.1X request message to the MUD control management device 30, where the 802.1X request message carries the MUD URL x provided for the terminal device 11 by the manufacturer of the terminal device 11.

In another example, the MUD URL request message 1 may alternatively be a DHCP request message or an LLDP request message. In this case, S101 may specifically include: The terminal device 11 sends the DHCP request message or the LLDP request message to the MUD control management device 30, where the DHCP request message or the LLDP request message carries the MUD URL x provided for the terminal device 11 by the manufacturer of the terminal 11. For example, the DHCP request message or the LLDP request message may carry, in an extended option (English: OPTION) field or a type-length-value (English: Type-Length-Value, TLV for short) field, the MUD URL x provided for the terminal device 11 by the manufacturer of the terminal device 11.

The terminal device 11 is equipped with the MUD URL x by the manufacturer before delivery, and is used to obtain, from a MUD file server 40 corresponding to the manufacturer, a MUD file 1 generated by the manufacturer for the terminal device 11. The MUD file 1, the MUD file server 40, and the MUD URL x are in one-to-one correspondence. The MUD URL x may include information such as the manufacturer of the terminal device 11, a device type of the terminal device 11, a firmware version number of the terminal device 11, and a system version number of the terminal device 11. For example, the MUD URL x is https://www.huawei.com/mud/router/ firmware_version_1234/os_version_ 4321.json. It can be learned based on the MUD URL x that the manufacturer of the terminal device 11 is huawei, the device type is router, the firmware version number of the terminal device 11 is 1234, and the system version number of the terminal device is 4321.

After receiving the MUD URL request message 1 sent by the terminal device 11, the MUD control management device 30 may obtain the MUD URL x from the MUD URL request message 1. In addition, the MUD control management device 30 may further obtain device information X of the terminal device 11 from the MUD URL request message 1. In one case, the MUD control management device 30 may obtain the device information X of the terminal device 11 by parsing the MUD URL x, for example, obtain a device type X of the terminal device 11 by parsing the MUD URL x, and use the device type X as the device information X of the terminal device 11. In another case, the MUD control management device 30 may obtain the device information X of the terminal device 11 based on content other than the MUD URL x in the MUD URL request message 1, for example, obtain, based on a source Internet Protocol (English: Internet Protocol, IP for short) address carried in the MUD URL request message 1, a network segment X to which the terminal device 11 belongs, and use the network segment X as the device information X of the terminal device 11.

The device information X of the terminal device 11 specifically refers to one or more pieces of attribute information of the terminal device 11. For example, the device information X of the terminal device 11 includes but is not limited to at least one of the following information: a device identifier X of the terminal device 11, the device type X of the terminal device 11, information about the manufacturer X of the terminal device 11, the network segment X to which the terminal device 11 belongs, an IP address of the terminal device 11, or a MAC address of the terminal device 11.

S103: The MUD control management device 30 obtains at least one MUD file from a plurality of MUD file servers based on a target obtaining policy X corresponding to the terminal device 11.

Between S102 and S103, this embodiment of this application may further include a process in which the MUD control management device 30 determines the target obtaining policy X corresponding to the terminal device 11. For example, S104 may be included between S102 and S103.

S104: The MUD control management device 30 determines, from at least one preconfigured obtaining policy, the target obtaining policy X corresponding to the terminal device 11.

The at least one obtaining policy is preconfigured and stored in the MUD control management device 30 depending on an actual requirement. The obtaining policy indicates a rule for obtaining a MUD file from the plurality of MUD file servers.

If only one obtaining policy is configured and stored in the MUD control management device 30, the MUD control management device 30 may directly use the obtaining policy as the target obtaining policy X, and perform S103.

If a plurality of obtaining policies are configured and stored in the MUD control management device 30, a plurality of mapping relationships including the obtaining policies may be stored in the MUD control management device 30. During specific implementation, S104 may specifically include: The MUD control management device 30 determines, from at least one locally stored mapping relationship, one mapping relationship corresponding to the terminal device 11, and denotes an obtaining policy in the determined mapping relationship as the target obtaining policy X.

In an example, the plurality of mapping relationships may be specifically first mapping relationships between an obtaining policy and a MUD URL of the terminal device, and the plurality of first mapping relationships include a first mapping relationship X1 between the target obtaining policy X and the MUD URL x of the terminal device 11. For example, the MUD control management device 30 stores m (where m is greater than or equal to 1) first mapping relationships: MUD URL x-obtaining policy 1, MUD URL 2-obtaining policy 2, ..., and MUD URL m-obtaining policy m. The obtaining policy 1 to the obtaining policy m may have a same obtaining policy or may be different. MUD URLs in the MUD URL x to the MUD URL m are different. In addition, the m first mapping relationships include the first mapping relationship X1: MUD URL x-target obtaining policy X. In this example, S104 may specifically include: The MUD control management device 30 may search at least one first mapping relationship for the first mapping relationship X1 in which a MUD URL is the MUD URL x, and denote an obtaining policy X in the first mapping relationship X1 as the target obtaining policy X.

In another example, the plurality of mapping relationships may be specifically second mapping relationships between an obtaining policy and device information of the terminal device, and the plurality of second mapping relationships include a second mapping relationship X1 between the target obtaining policy X and the device information X of the terminal device 11. For example, the MUD control management device 30 stores m second mapping relationships: device information 1-obtaining policy 1, device information 2-obtaining policy 2, ..., and device information m-obtaining policy m. The obtaining policy 1 to the obtaining policy m may have a same obtaining policy or may be different. Content in the device information 1 to the device information m is different. In addition, the m second mapping relationships include the second mapping relationship X1: device information X-target obtaining policy X. In this example, S104 may specifically include: The MUD control management device 30 may search at least one second mapping relationship for the second mapping relationship X1 in which device information is the device information X, and denote an obtaining policy X in the second mapping relationship X1 as the target obtaining policy X.

The target obtaining policy X is one of obtaining policies preconfigured by the MUD control management device. The following describes several possible target obtaining policies X by using some examples.

In a first example, the target obtaining policy X may be specifically: redirecting, based on a MUD URL provided by a manufacturer of a terminal device for the terminal device, a first MUD file server corresponding to the MUD URL to at least one target MUD file server in the plurality of MUD file servers, and obtaining the MUD file in the at least one target MUD file server. The first MUD file server belongs to the plurality of MUD file servers, the at least one target MUD file server to which redirection is performed includes a second MUD file server, and the second MUD file server and the first MUD file server are different servers. The network device 200 is used as an example. The target obtaining policy X corresponds to the terminal device 11. When the MUD file server 40 is redirected to the MUD file server 40 and the MUD file server 50, the target obtaining policy X may specifically indicate: redirecting the MUD file server 40 corresponding to the MUD URL x to the MUD file server 40 and the MUD file server 50 based on the MUD URL x of the terminal device 11, and obtaining the MUD file 1 from the MUD file server 40 and the MUD file 2 from the MUD file server 50. Alternatively, when the MUD file server 40 is redirected to the MUD file server 40, the MUD file server 50, and the MUD file server 60, the target obtaining policy X may alternatively specifically indicate: redirecting the MUD file server 40 corresponding to the MUD URL x to the MUD file server 40, the MUD file server 50, and the MUD file server 60 based on the MUD URL x of the terminal device 11, and obtaining the MUD file 1 from the MUD file server 40, the MUD file 2 from the MUD file server 50, and the MUD file 3 from the MUD file server 60. Alternatively, when the MUD file server 40 is redirected to the MUD file server 60, the target obtaining policy X may alternatively specifically indicate: redirecting the MUD file server 40 corresponding to the MUD URL x to the MUD file server 60 based on the MUD URL x of the terminal device 11, and obtaining the MUD file 3 from the MUD file server 60.

In a second example, the target obtaining policy X may alternatively be specifically: pre-designating at least one target MUD file server from the plurality of MUD file servers, and obtaining the MUD file in the at least one target MUD file server. The network device 200 is used as an example. When the specified target MUD file server includes the MUD file server 40 and the MUD file server 50, the target obtaining policy X may specifically indicate: obtaining the MUD file 1 from the MUD file server 40 and the MUD file 2 from the MUD file server 50. Alternatively, when the specified target MUD file server includes the MUD file server 40, the MUD file server 50, and the MUD file server 60, the target obtaining policy X may alternatively specifically indicate: obtaining the MUD file 1 from the MUD file server 40, the MUD file 2 from the MUD file server 50, and the MUD file 3 from the MUD file server 60. Alternatively, when the specified target MUD file server includes the MUD file server 60, the target obtaining policy X may alternatively specifically indicate: obtaining the MUD file 3 from the MUD file server 60.

In a third example, the target obtaining policy X may alternatively be specifically: globally updating an obtained MUD file to a MUD file that is latest read from a MUD file server in a sequential reading principle. The network device 200 is still used as an example. The target obtaining policy X corresponding to the terminal device 11 may specifically indicate: In a principle of sequentially reading all MUD file servers in a first-to-last production (or deployment) sequence, the MUD control management device 30 first reads the MUD file 1 from the MUD file server 40; then reads the MUD file 2 from the MUD file server 50, and globally updates the MUD file 1 to the MUD file 2; and then reads the MUD file 3 from the MUD file server 60, and globally updates the MUD file 2 to the MUD file 3. Alternatively, the target obtaining policy X corresponding to the terminal device 11 may specifically indicate: In a principle of sequentially reading other MUD file servers than the MUD file server 40 in a last-to-first production (or deployment) sequence, the MUD control management device 30 first reads the MUD file 3 from the MUD file server 60; and then reads the MUD file 2 from the MUD file server 50, and globally updates the MUD file 3 to the MUD file 2. It should be noted that, in the third example, the target MUD file server includes all or a part of a plurality of MUD file servers read in the sequential reading principle that are specified in the target obtaining policy X.

In a fourth example, the target obtaining policy X may alternatively be specifically: reading and storing a plurality of MUD files in the plurality of MUD file servers in sequence. The network device 200 is still used as an example. The target obtaining policy X corresponding to the terminal device 11 may specifically indicate: respectively reading the MUD file 1, the MUD file 2, and the MUD file 3 from the MUD file server 40, the MUD file server 50, and the MUD file server 60 that correspond to the terminal device 11. It should be noted that in the fourth example, the target MUD file server includes a MUD file server in the plurality of MUD file servers of the terminal device.

It should be noted that, in embodiments of this application, the plurality of MUD file servers are all MUD servers corresponding to the terminal device 11, and each of the plurality of MUD file servers stores a MUD file generated for the terminal device 11 in one or more production (or deployment) phases. For example, in the communication system 200 shown in FIG. 2, the plurality of MUD file servers corresponding to the terminal device 11 include the MUD file server 40, the MUD file server 50, and the MUD file server 60. The target MUD file server is one of the plurality of MUD file servers. For example, the target MUD file server corresponding to the terminal device 11 may be the MUD file server 40, the MUD file server 50, or the MUD file server 60. The at least one target MUD file server includes all or a part of the plurality of MUD file servers. For example, the at least one target MUD file server corresponding to the terminal device 11 may include the MUD file server 40, the MUD file server 50, and the MUD file server 60. Alternatively, the target MUD file server corresponding to the terminal device 11 may be the MUD file server 40.

S104 is performed to obtain the target obtaining policy X corresponding to the terminal device 11. This provides a basis for performing S103.

In an example, that the MUD control management device 30 obtains at least one MUD file from a plurality of MUD file servers based on a target obtaining policy X corresponding to the terminal device 11 in S103 may include: The MUD control management device 30 first determines the at least one target MUD file server from the plurality of MUD file servers based on the target obtaining policy X corresponding to the terminal device 11, and obtains the at least one MUD file from the at least one target MUD file server.

In an example, the target obtaining policy X is redirecting, based on the MUD URL provided by the manufacturer of the terminal device for the terminal device, the first MUD file server corresponding to the MUD URL to the at least one target MUD file server in the plurality of MUD file servers, and obtaining the MUD file in the at least one target MUD file server. The first MUD file server belongs to the plurality of MUD file servers, and the at least one target MUD file server to which redirection is performed generally cannot include only the first MUD file server. It may be determined that the at least one target MUD file server includes the second MUD file server, and the second MUD file server and the first MUD file server are different servers. The network device 200 is used as an example. Assuming that the target obtaining policy X is redirecting the MUD file server 40 to the MUD file server 40 and the MUD file server 50, S103 may specifically include: The MUD control management device 30 determines, from the MUD file server 40, the MUD file server 50, and the MUD file server 60, that the at least one target MUD file server includes the MUD file server 40 and the MUD file server 50, so as to obtain the MUD file 1 from the MUD file server 40 and the MUD file 2 from the MUD file server 50. The network device 200 is still used as an example. Assuming that the target obtaining policy X is redirecting the MUD file server 40 to the MUD file server 40, the MUD file server 50, and the MUD file server 60, S103 may specifically include: The MUD control management device 30 determines, from the MUD file server 40, the MUD file server 50, and the MUD file server 60, that the at least one target MUD file server includes the MUD file server 40, the MUD file server 50, and the MUD file server 60, so as to obtain the MUD file 1 from the MUD file server 40, the MUD file 2 from the MUD file server 50, and the MUD file 3 from the MUD file server 60.

In another example, the target obtaining policy X is pre-designating the at least one target MUD file server from the plurality of MUD file servers, and obtaining the MUD file in the at least one target MUD file server. The network device 200 is used as an example. Assuming that the at least one target MUD file server specified in the target obtaining policy X is the MUD file server 40, S103 may specifically include: The MUD control management device 30 determines, from the MUD file server 40, the MUD file server 50, and the MUD file server 60, that the at least one target MUD file server is the MUD file server 40, so as to obtain the MUD file 1 from the MUD file server 40. The network device 200 is still used as an example. Assuming that the at least one target MUD file server specified in the target obtaining policy X is the MUD file server 40, the MUD file server 50, and the MUD file server 60, S103 may specifically include: The MUD control management device 30 determines, from the MUD file server 40, the MUD file server 50, and the MUD file server 60, that the at least one target MUD file server is the MUD file server 40, the MUD file server 50, and the MUD file server 60, so as to obtain the MUD file 1 from the MUD file server 40, the MUD file 2 from the MUD file server 50, and the MUD file 3 from the MUD file server 60.

In still another example, the target obtaining policy X is globally updating the obtained MUD file to the MUD file that is latest read from the MUD file server in the sequential reading principle. The network device 200 is used as an example. Assuming that the sequential reading principle in the target obtaining policy X is the principle of sequentially reading all the MUD file servers in the first-to-last production (or deployment) sequence, S103 may specifically include: The MUD control management device 30 first reads the MUD file 1 from the MUD file server 40; then reads the MUD file 2 from the MUD file server 50, and globally updates the MUD file 1 to the MUD file 2; and then reads the MUD file 3 from the MUD file server 60, and globally updates the MUD file 2 to the MUD file 3. The network device 200 is used as an example. Assuming that the sequential reading principle in the target obtaining policy X is the principle of sequentially reading other MUD file servers than the MUD file server 40 in the last-to-first production (or deployment) sequence, S103 may specifically include: The MUD control management device 30 first reads the MUD file 3 from the MUD file server 60; and then reads the MUD file 2 from the MUD file server 50, and globally updates the MUD file 3 to the MUD file 2. It should be noted that, in the example, the target MUD file server includes all or a part of the plurality of MUD file servers read in the sequential reading principle that are specified in the target obtaining policy X.

In still another example, the target obtaining policy X is reading and storing the plurality of MUD files in the plurality of MUD file servers in sequence. The network device 200 is still used as an example. S103 may specifically include: The MUD control management device 30 reads the MUD file 1 from the MUD file server 40, the MUD file 2 from the MUD file server 50, and the MUD file 3 from the MUD file server 60. It should be noted that in the example, the at least one target MUD file server includes all of the plurality of MUD file servers of the terminal device.

It should be noted that the target MUD file server in the target obtaining policy X is determined depending on an actual requirement. In an example, the target MUD file server may be determined based on trust in a production (or deployment) phase. For example, if a manufacturer is trusted, the MUD file server 40 corresponding to the manufacturer is specified as the target MUD file server. For another example, if a user is trusted, the MUD file server 60 corresponding to the user is specified as the target MUD file server. In another example, the target MUD file server may alternatively be determined based on a service requirement. In still another example, the target MUD file server may alternatively be determined based on a subsequent processing feature of a MUD file.

In some other possible implementations, if the target obtaining policy X may alternatively indicate a location at which the MUD file corresponding to the terminal device 11 is stored in each target MUD file server, that is, the target obtaining policy X indicates at least one target MUD URL, S 103 may specifically include: The MUD control management device 30 first determines the at least one target MUD URL based on the target obtaining policy X, and then obtains the at least one MUD file based on the at least one target MUD URL. A quantity of the at least one target MUD URL is less than or equal to a quantity of all the MUD file servers included in the plurality of MUD file servers.

A plurality of MUD URLs of all MUD files generated by the terminal device 11 in all production (or deployment) phases are known in the MUD control management device 30. A location of the MUD file 1 of the terminal device 11 in the MUD file server 40 is the MUD URL x, a location of the MUD file 2 in the MUD file server 50 is a MUD URL y, and a location of the MUD file 3 in the MUD file server 60 is a MUD URL z. The MUD control management device 30 can determine the at least one target MUD URL from the plurality of MUD URLs based on the target obtaining policy X. A target MUD URL is one of the plurality of MUD URLs. For example, a target MUD URL corresponding to the terminal device 11 may be the MUD URL x, the MUD URL y, or the MUD URL z. The at least one target MUD URL includes all or a part of the plurality of MUD URLs. For example, the at least one target MUD URL corresponding to the terminal device 11 may include the MUD URL x, the MUD URL y, and the MUD URL z. Alternatively, the target MUD URL corresponding to the terminal device 11 may be the MUD URL x.

In an example, the target obtaining policy X may alternatively be: redirecting the MUD file server 40 corresponding to the MUD URL x stored in the terminal device 11 to the at least one target MUD URL. For example, when the target obtaining policy X is redirecting the MUD file server 40 corresponding to the MUD URL x to the MUD URL x, the MUD URL y, and the MUD URL z, the at least one target MUD URL includes the MUD URL x, the MUD URL y, and the MUD URL z. For another example, when the target obtaining policy X is redirecting the MUD file server 40 corresponding to the MUD URL x to the MUD URL z, the at least one target MUD URL includes only the MUD URL z. In this embodiment, S103 may specifically include: The MUD control management device 30 determines, based on the target obtaining policy X, the at least one target MUD URL to which the MUD control management device 30 corresponding to the MUD URL x is redirected, and obtains the at least one MUD file based on the at least one target MUD URL.

It should be noted that the target MUD URL in the target obtaining policy X may be determined depending on an actual requirement. For example, the target MUD URL may be determined based on trust in a production (or deployment) phase. For another example, the target MUD URL may alternatively be determined based on a service requirement. For still another example, the target MUD URL may alternatively be determined based on a subsequent processing feature of a MUD file.

In this way, S103 may be: The MUD control management device 30 obtains the MUD file corresponding to the terminal device 11 from each of the at least one target MUD file server, or S103 may be: The MUD control management device 30 obtains, based on each of the at least one target MUD URL, a corresponding MUD file at a location of the target MUD URL on a MUD file server corresponding to the target MUD URL.

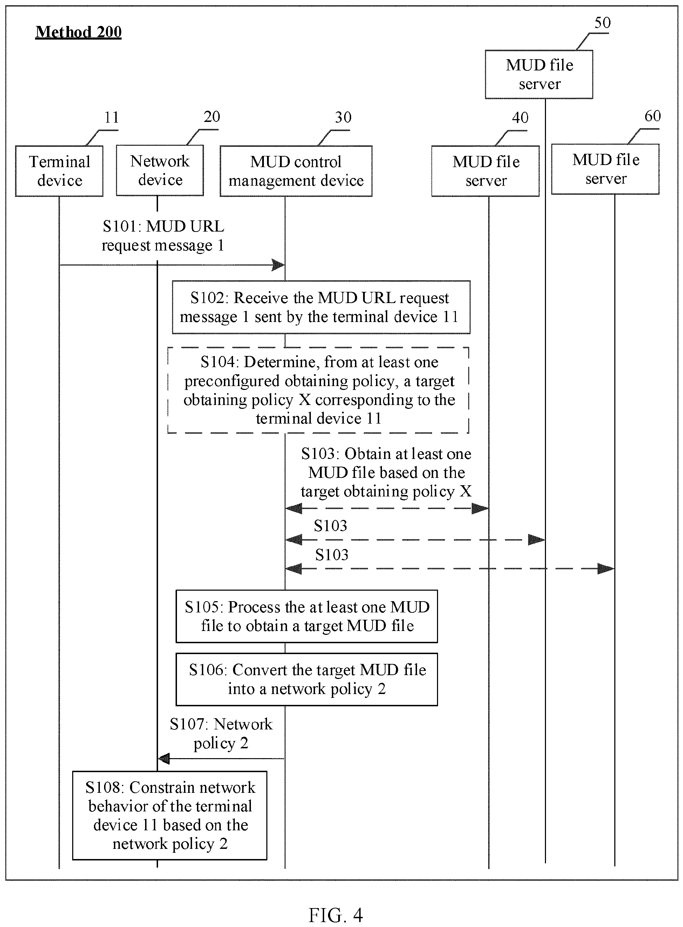

After obtaining the at least one MUD file from the plurality of MUD file servers, the MUD control management device 30 may comprehensively consider the at least one MUD file, determine a network policy corresponding to the terminal device 11, and apply the network policy to the network device 20, so that the network device 20 constrains network behavior of the terminal device 11 based on the network policy. For details of a method for processing the obtained at least one MUD file, refer to the following method 200 shown in FIG. 4.

It can be learned that according to the method 100 provided in this embodiment of this application, in a scenario in which a plurality of MUD files are distributed on different MUD file servers, when a terminal device accesses a network, a MUD control management device obtains at least one MUD file from a plurality of MUD file servers based on a target obtaining policy that corresponds to the terminal device and that is in the MUD control management device, so that the MUD file is obtained from the plurality of MUD file servers in the method 100. Therefore, network behavior of the terminal device can be more accurately constrained based on the MUD file obtained from the plurality of MUD file servers.

It should be noted that, in the method 100 provided in this embodiment of this application, the target obtaining policy that corresponds to the terminal device and that is in the MUD control management device may be further flexibly adjusted based on a requirement change. Different target obtaining policies are flexibly defined in the MUD control management device based on actual requirements, so that a MUD file obtaining mechanism provided in the method 100 is more flexible in the scenario in which the plurality of MUD files are distributed on the plurality of MUD file servers, and it is also possible to obtain different MUD files in different phases based on different requirements. For example, the terminal device can obtain a MUD file during service requirement change, function change, device maintenance, or the like, so as to flexibly and accurately constrain network behavior of the terminal device.

After the at least one MUD file of the terminal device 11 is obtained in S103, if the at least one MUD file is one MUD file, for example, only the MUD file 1 is obtained, the MUD control management device 30 may convert the MUD file 1 into a network policy 1, and apply the network policy 1 to the network device 20, so that the network device 20 constrains network behavior of the terminal device 11 based on the network policy 1. If the at least one MUD file is at least two MUD files, to avoid a conflict between MUD information of a same device description entry and better constrain network behavior of the terminal device 11, the MUD control management device 30 needs to process the at least two MUD files to obtain a processed target MUD file, convert the target MUD file into a network policy 2, and apply the network policy 2 to the network device 20, so that the network device 20 constrains network behavior of the terminal device 11 based on the network policy 2.

An embodiment of this application further provides another method 200 for obtaining a MUD file. Refer to FIG. 4. After S103, the method 200 may further include the following S105 to S108.

S105. The MUD control management device 30 processes the at least one MUD file to obtain a target MUD file.

In an example, S105 may include, for example, the following steps.

S1051: The MUD control management device 30 determines, from at least one preconfigured MUD file processing policy, a target MUD file processing policy X corresponding to the terminal device 11.

S1052. The MUD control management device 30 processes the at least one MUD file based on the target MUD file processing policy X to obtain the target MUD file.

At least one MUD file processing policy may be preconfigured and stored in the MUD control management device 30 depending on an actual requirement. The MUD file processing policy indicates a rule of processing the obtained at least one MUD file to obtain the target MUD file.

If only one MUD file processing policy is configured and stored in the MUD control management device 30, the MUD control management device 30 may directly use the MUD file processing policy as the target MUD file processing policy X, and perform subsequent steps.

If a plurality of MUD file processing policies are configured and stored in the MUD control management device 30, a plurality of mapping relationships including the MUD file processing policies may be stored in the MUD control management device 30. During specific implementation, S1051 may specifically include: The MUD control management device 30 determines one mapping relationship corresponding to the terminal device 11 from at least one locally stored mapping relationship, and records a MUD file processing policy in the determined mapping relationship as the target MUD file processing policy X. In an example, the plurality of mapping relationships may be specifically mapping relationships between a MUD file processing policy and a MUD URL of a terminal device, and the plurality of mapping relationships include a mapping relationship X2 between the target MUD file processing policy X and a MUD URL x of the terminal device 11. In another example, the plurality of mapping relationships may be specifically mapping relationships between an obtaining policy and device information of a terminal device, and the plurality of mapping relationships include a mapping relationship X2 between the target MUD file processing policy X and device information X of the terminal device 11.

In a possible implementation, the target MUD file processing policy X may indicate that a MUD file, generated in a specific production (or deployment) phase, of at least two MUD files is used as the target MUD file. For example, assuming that the MUD file obtained in S103 includes a MUD file 1, a MUD file 2, and a MUD file 3, the target MUD file processing policy X may indicate that the MUD file 1 generated by a unique trusted manufacturer is the target MUD file, or the processing policy may alternatively indicate that the latest generated MUD file 3 is the target MUD file.

In another possible implementation, the target MUD file processing policy X may also indicate a method for generating the target MUD file based on device description entries in at least two MUD files. The target MUD file processing policy X may not only include Manner 1 that indicates an operation for determining a device description entry in the target MUD file, but also include Manner 2 that indicates an operation for determining MUD information of the device description entry in the target MUD file. Manner 1 and Manner 2 may be set depending on an actual requirement.

Manner 1 may specifically indicate: obtaining a union set or an intersection set of device description entries included in each of obtained MUD files, to obtain the device description entry in the target MUD file. For example, the at least one MUD file includes a MUD file 1 and a MUD file 2, the MUD file 1 includes a device description entry 1 and a device description entry 2, and the MUD file 2 includes the device description entry 2 and a device description entry 3. In one case, based on an indication of the target MUD file processing policy X of obtaining a union set, the target MUD file may include the device description entry 1, the device description entry 2, and the device description entry 3. In another case, based on an indication of the target MUD file processing policy X of obtaining an insertion set, the target MUD file may include the device description entry 2.

Manner 2 may specifically indicate: determining MUD information of each device description entry in the target MUD file based on MUD information of device description entries in the obtained MUD files.

In an example, Manner 2 may indicate that MUD information of a same device description entry in the target MUD file is subject to MUD information of the device description entry in a specific MUD file. For example, the at least one MUD file includes a MUD file 1 and a MUD file 2, the MUD file 1 includes a device description entry 2 whose MUD information is Q1, and the MUD file 2 includes a device description entry 2 whose MUD information is Q2. In one case, if the target MUD file processing policy X indicates that the MUD information of the same device description entry in the target MUD file is subject to MUD information in a MUD file provided by a manufacturer of the terminal device 11 (that is, the MUD information in the MUD file 1), based on the indication of the target MUD file processing policy X, MUD information of a device description entry 2 in the target MUD file is Q1. In another case, if the target MUD file processing policy X indicates that the MUD information of the same device description entry in the target MUD file is subject to the MUD information in the MUD file 2, based on the indication of the target MUD file processing policy X, MUD information of a device description entry 2 in the target MUD file is Q2.

In another example, Manner 2 may alternatively indicate that MUD information of a same device description entry in the target MUD file is a result obtained by performing a first operation on MUD information of the device description entry in the at least two MUD files. For example, the at least one MUD file includes a MUD file 1 and a MUD file 2, the MUD file 1 includes a device description entry 2 whose MUD information is Q1, and the MUD file 2 includes a device description entry 2 whose MUD information is Q2. In this case, based on an indication of the target MUD file processing policy X, MUD information of a device description entry 2 in the target MUD file is Q=f(Q1, Q2), where f() may be specifically any first operation performed on MUD information of a same device description entry in different MUD files, where for example, f(Q1, Q2)=min(Q1, Q2) or f(Q1, Q2)=(Q1, Q2)/2.

In still another example, Manner 2 may alternatively indicate that a same device description entry retains a plurality of pieces of MUD information, and the plurality of pieces of MUD information are separately associated with a different service. For example, the at least one MUD file includes a MUD file 1 and a MUD file 2, the MUD file 1 includes a device description entry 2 whose MUD information is Q1, and the MUD file 2 includes a device description entry 2 whose MUD information is Q2. In this case, based on an indication of the target MUD file processing policy X, the MUD information Q1 of the device description entry 2 in the target MUD file is associated with a service 1, and the MUD information Q2 of the device description entry 2 is associated with a service 2. In this way, when the terminal device 11 executes different services, network behavior of the terminal device 11 may be constrained based on MUD information of device description entries corresponding to the services.

The MUD control management device 30 performs S1051 to obtain the target MUD file processing policy X. This provides a basis for S1052.

For S1052, the MUD control management device 30 determines the target MUD file based on the target MUD file processing policy X, where the target MUD file includes at least one device description entry and MUD information corresponding to the at least one device description entry. Each device description entry in the target MUD file and MUD information of the device description entry are used to constrain network behavior of the network device 11.

In an example, if the target MUD file processing policy X indicates that the MUD file, generated in the specific production (or deployment) phase, of the at least two MUD files is used as the target MUD file, S1052 is specifically that the MUD control management device 30 obtains, from the obtained at least one MUD file based on the target MUD file processing policy X, the MUD file indicated by the target MUD file processing policy X, and uses the MUD file as the target MUD file. For example, assuming that the MUD file obtained in S103 includes a MUD file 1, a MUD file 2, and a MUD file 3, the target MUD file processing policy X indicates that the MUD file 1 generated by the unique trusted manufacturer is the target MUD file. In this case, S1052 is specifically that the MUD control management device 30 determines the MUD file 1 from the MUD file 1, the MUD file 2, and the MUD file 3 as the target MUD file.

In another example, the target MUD file processing policy X indicates that the target MUD file is generated based on the device description entries in the at least two MUD files.

Assuming that the target MUD file processing policy X indicates that the device description entry in the target MUD file is a union set of device description entries included in the MUD files, S 1052 may include: The MUD control management device obtains a device description entry from each obtained MUD file, and uses the union set of the device description entries of the MUD files as the device description entry included in the target MUD file. For example, the at least one MUD file includes a MUD file 1 and a MUD file 2, the MUD file 1 includes a device description entry 1 and a device description entry 2, and the MUD file 2 includes the device description entry 2 and a device description entry 3. In this case, the target MUD file generated in S1052 may include the device description entry 1, the device description entry 2, and the device description entry 3.

Assuming that the target MUD file processing policy X indicates that the device description entry in the target MUD file is an intersection set of device description entries included in the MUD files, S1052 may include: The MUD control management device 30 obtains a device description entry from each obtained MUD file, and uses the intersection set of the device description entries of the MUD files as the device description entry included in the target MUD file. For example, the at least one MUD file includes a MUD file 1 and a MUD file 2, the MUD file 1 includes a device description entry 1 and a device description entry 2, and the MUD file 2 includes the device description entry 2 and a device description entry 3. In this case, the target MUD file generated in S1052 may include the device description entry 2.

After the device description entry of the target MUD file is determined, the MUD information of each device description entry may be further determined in any one of the following manners.

If a device description entry of the target MUD file appears in only one obtained MUD file, or if a device description entry of the target MUD file appears in different obtained MUD files and MUD information of the device description entry in the different MUD files is the same, S1052 may include: The MUD control management device 30 determines the MUD information of the device description entry in the obtained MUD file or files as MUD information of the device description entry in the target MUD file.

If a device description entry of the target MUD file appears in different obtained MUD files and MUD information of the device description entry in the different MUD files is different, S 1052 may include: The MUD control management device 30 processes, based on the target MUD file processing policy X, the MUD information of the device description entry in the different MUD files to obtain MUD information of the device description entry in the target MUD file.

In one case, the target MUD file processing policy X indicates that the MUD information of the same device description entry in the target MUD file is subject to the MUD information of the device description entry in the specific MUD file. In this case, in S1052, the MUD control management device 30 determines, based on the target MUD file processing policy X, the MUD information of the device description entry in the specific MUD file as the MUD information of the device description entry in the target MUD file. For example, the at least one MUD file includes the MUD file 1 and the MUD file 2, the MUD file 1 includes the device description entry 2 whose MUD information is Q1, the MUD file 2 includes the device description entry 2 whose MUD information is Q2, and the target MUD file processing policy X indicates that the MUD information of the same device description entry in the target MUD file is subject to the MUD information in the MUD file provided by the manufacturer of the terminal device 11 (that is, the MUD information in the MUD file 1). In this case, the MUD information of the device description entry 2 in the target MUD file generated in S1052 is Q1. For another example, if the target MUD file processing policy X indicates that the MUD information of the same device description entry in the target MUD file is subject to the MUD information in the MUD file 2, the MUD information of the device description entry 2 in the target MUD file generated in S1052 is Q2.

In another case, the target MUD file processing policy X indicates that the MUD information of the same device description entry in the target MUD file is the result obtained by performing the first operation on the MUD information of the device description entry in the at least two MUD files. In this case, in S 1052, the MUD control management device 30 obtains different MUD information of the same device description entry from the at least two MUD files based on the target MUD file processing policy X, and performs the first operation on the different MUD information, where the operation result is denoted as the MUD information of the device description entry in the target MUD file. For example, the at least one MUD file includes the MUD file 1 and the MUD file 2, the MUD file 1 includes the device description entry 2 whose MUD information is Q1, and the MUD file 2 includes the device description entry 2 whose MUD information is Q2. In this case, the MUD information of the device description entry 2 in the target MUD file generated in S1052 is Q=f(Q1, Q2), where f() is the first operation in the target MUD file processing policy X, where for example, f(Q1, Q2)=min(Q1, Q2) or f(Q1, Q2)=(Q1, Q2)/2.

In still another case, the target MUD file processing policy X indicates that the same device description entry retains the plurality of pieces of MUD information, and the plurality of pieces of MUD information are separately associated with a different service. For example, the at least one MUD file includes the MUD file 1 and the MUD file 2, the MUD file 1 includes the device description entry 2 whose MUD information is Q1, and the MUD file 2 includes the device description entry 2 whose MUD information is Q2. In this case, in the target MUD file generated by the MUD control management device 30 based on the target MUD file processing policy X in S1052, the MUD information Q1 of the device description entry 2 is associated with the service 1, and the MUD information Q2 of the device description entry 2 is associated with the service 2.

S106: The MUD control management device 30 converts the target MUD file into a network policy 2.

S107: The MUD control management device 30 sends the network policy 2 to a network device 20.

S108: The network device 20 constrains network behavior of the terminal device 11 based on the network policy 2.

Implementations of S106 to S108 are consistent with a manner stipulated in the RFC 8520 protocol. For specific implementations and related descriptions, refer to related descriptions in the RFC 8520. Details are not described herein.

It should be noted that, in the MUD control management device 30, in one case, there may be specifically two sets of mapping relationships: a first set is at least one mapping relationship between an obtaining policy and device information of a terminal device (or between an obtaining policy and a MUD URL provided by a manufacturer for a terminal device), and a second set is at least one mapping relationship between a MUD file processing policy and device information of a terminal device (or between a MUD file processing policy and a MUD URL provided by a manufacturer for a terminal device). In this case, the first set of mapping relationships is used in S104, and the second set of mapping relationships is used in S1051. Alternatively, in another case, there may be one set of mapping relationship, and is specifically at least one mapping relationship between an obtaining policy, a MUD file processing policy, and device information of a terminal device (or between an obtaining policy, a MUD file processing policy, and a MUD URL provided by a manufacturer for a terminal device). In this case, a correspondence between an obtaining policy and device information of a terminal device (or between an obtaining policy and a MUD URL provided by a manufacturer for a terminal device) in the mapping relationship is used in S104, and a correspondence between a MUD file processing policy and device information of a terminal device (or between a MUD file processing policy and a MUD URL provided by a manufacturer for a terminal device) in the mapping relationship is used in S1051.

It can be learned that according to the method 200 provided in this embodiment of this application, in a scenario in which a plurality of MUD files are distributed on different MUD file servers, when the terminal device 11 accesses a network, the MUD control management device 30 obtains the at least one MUD file from the plurality of MUD file servers based on the target obtaining policy X corresponding to the terminal device 11, so that the MUD file is obtained from the plurality of MUD file servers in the method 200. In addition, to more accurately constrain the terminal device 11 based on the obtained at least one MUD file, and avoid a constraint conflict, on network behavior of the terminal device 11, caused by different MUD information of a same device description entry in a plurality of obtained MUD files, the MUD control management device 30 can further process the obtained at least one MUD file to determine the target MUD file, so that network behavior of the terminal device 11 can be accurately constrained based on the processed target MUD file in the method 200.

It should be noted that, in the method 200 provided in this embodiment of this application, the target MUD file processing policy in the MUD control management device may also be flexibly adjusted based on a requirement change. Different target MUD file processing policies are flexibly defined in the MUD control management device based on actual requirements, so that in the scenario in which the plurality of MUD files are distributed on the plurality of MUD file servers provided in the method 200, an obtained MUD file is flexibly processed based on different requirements, to flexibly and accurately constrain the network behavior of the terminal device based on the target MUD file obtained through processing.

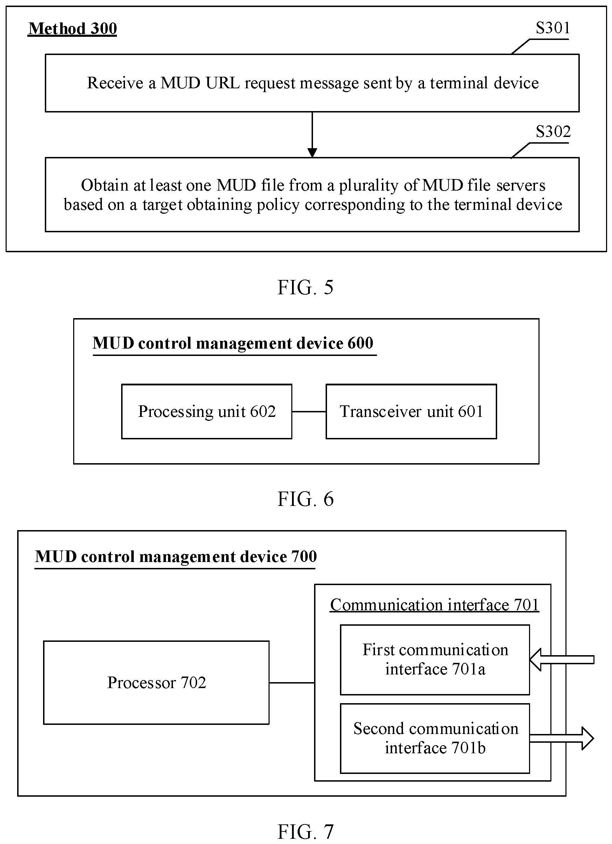

FIG. 5 is a schematic flowchart of a method 300 for obtaining a manufacturer usage description MUD according to an embodiment of this application. The method 300 is implemented by a MUD control management device. For example, the method 300 for obtaining a MUD may include the following steps.

S301: Receive a MUD URL request message sent by a terminal device.

S302: Obtain at least one MUD file from a plurality of MUD file servers based on a target obtaining policy corresponding to the terminal device.

The MUD control management device in the method 300 may be specifically the MUD control management device 30 in the foregoing embodiments. For specific operations performed by the MUD control management device, refer to the operations performed by the MUD control management device 30 in the method 100. Specifically, for related descriptions of S301 and S302, refer to S102 and S103 in the method 100. The terminal device may refer to the terminal device 11, the MUD URL request message may be the MUD URL request message 1 in the method 100, the target obtaining policy may refer to the target obtaining policy X, the plurality of MUD file servers include the MUD file server 40, the MUD file server 50, and the MUD file server 60, and the at least one MUD file may include at least one of the MUD file 1, the MUD file 2, or the MUD file 3.

In an example, the MUD control management device may store a first mapping relationship between the target obtaining policy and a MUD URL that is provided by a manufacturer of the terminal device for the terminal device. In this case, the method 300 may further include: The MUD control management device obtains, from the MUD URL request message, the MUD URL provided by the manufacturer of the terminal device for the terminal device, and determines that the MUD URL matches the first mapping relationship, to further obtain the target obtaining policy based on the first mapping relationship.

In another example, the MUD control management device may also store a second mapping relationship between device information of the terminal device and the target obtaining policy. In this case, the method 300 may further include: The MUD control management device obtains the device information of the terminal device from the MUD URL request message, and determines that the device information matches the second mapping relationship, to further obtain the target obtaining policy based on the second mapping relationship. The device information of the terminal device may include, for example, one or more of the following: a device identifier of the terminal device; a device type of the terminal device; a network segment to which the terminal device belongs; an internet protocol IP address of the terminal device; a media access control MAC address of the terminal device; or information about the manufacturer of the terminal device.

In some possible implementations, there is only one obtaining policy in the MUD control management device. In this case, when receiving a MUD URL request message sent by any terminal device, the MUD control management device uses the unique obtaining policy as the target obtaining policy, and obtains the at least one MUD file from the plurality of MUD file servers based on the target obtaining policy.

In some other possible implementations, there are a plurality of obtaining policies in the MUD control management device. In this case, the method 300 may further include: The MUD control management device determines the target obtaining policy from a plurality of preconfigured obtaining policies. The plurality of obtaining policies may be specifically locally configured and stored in the MUD control management device, or may be obtained by the MUD control management device from another device.

The obtaining policy (including the target obtaining policy) indicates a rule for obtaining a MUD file from the plurality of MUD file servers. In a case, in an example, the target obtaining policy may include: redirecting, based on the MUD URL provided by the manufacturer of the terminal device for the terminal device, a first MUD file server corresponding to the MUD URL to at least one target MUD file server, and obtaining the MUD file in the at least one target MUD file server, where the plurality of MUD file servers include the first MUD file server, and the at least one target MUD file server includes a second MUD file server. Alternatively, in another case, in an example, the target obtaining policy may include: globally updating an obtained MUD file to a MUD file that is latest read from a MUD file server in a sequential reading principle. Alternatively, in still another case, in an example, the target obtaining policy may include: reading and storing a plurality of MUD files in the plurality of MUD file servers in sequence. Alternatively, in yet another case, in an example, the target obtaining policy may include: pre-designating at least one target MUD file server from the plurality of MUD file servers, and obtaining the MUD file in the at least one target MUD file server.

In an example, the obtaining at least one MUD file from a plurality of MUD file servers based on a target obtaining policy corresponding to the terminal device in S302 may specifically include: determining the at least one target MUD file server from the plurality of MUD file servers based on the target obtaining policy; and obtaining the at least one MUD file from the at least one target MUD file server. It should be noted that the target MUD file server is one of the plurality of MUD file servers. The at least one target MUD file server may be all of the plurality of MUD file servers, or the at least one target MUD file server may be a part of the plurality of MUD file servers.

In an example, the target obtaining policy may alternatively include: redirecting, based on the MUD URL provided by the manufacturer of the terminal device for the terminal device, the first MUD file server corresponding to the MUD URL to at least one target MUD URL, and obtaining the at least one MUD file from the plurality of MUD file servers based on the at least one target MUD URL. A quantity of the at least one target MUD URL is less than or equal to a quantity of all MUD file servers included in the plurality of MUD file servers. The obtaining at least one MUD file from a plurality of MUD file servers based on a target obtaining policy corresponding to the terminal device in S302 may specifically include: determining, based on the target obtaining policy, the at least one target MUD URL from a plurality of MUD URLs corresponding to the plurality of MUD file servers; and obtaining the at least one MUD file from the at least one target MUD URL. It should be noted that the target MUD URL is a MUD URL that is of the plurality of MUD URLs in the plurality of MUD file servers and that corresponds to the stored MUD file of the terminal device. The at least one target MUD URL may be all of the plurality of MUD URLs, or the at least one target MUD URL may be a part of the plurality of MUD URLs.

In some specific implementations, after the MUD control management device performs S302 to obtain the at least one MUD file, the method 300 may further include: The MUD control management device processes the at least one MUD file to obtain a target MUD file, where the target MUD file is for constraining network behavior of the terminal device. In one case, when the at least one MUD file includes only one MUD file, the MUD control management device may directly use the unique obtained MUD file as the target MUD file, and constrain the network behavior of the terminal device based on the target MUD file. In another case, when the at least one MUD file includes at least two MUD files, the MUD control management device needs to process the at least two MUD files to obtain the target MUD file, and constrains the network behavior of the terminal device based on the target MUD file.

It should be noted that for related descriptions and achieved effects of this implementation, refer to related descriptions of S105 in the method 200 shown in FIG. 4.

In an example, a process of processing the at least one MUD file to obtain the target MUD file may include, for example, a process of determining a device description entry included in the target MUD file. In one case, all device description entries included in the obtained MUD file may be used as device description entries in the target MUD file. Assuming that the at least one MUD file includes a first MUD file and a second MUD file, the first MUD file includes a first device description entry of the terminal device, the second MUD file includes a second device description entry of the terminal device, and the first device description entry is different from the second device description entry, the target MUD file includes the first device description entry and the second device description entry. In another case, a device description entry included in all the obtained MUD files may alternatively be used as a device description entry in the target MUD file. Assuming that the at least one MUD file includes a first MUD file and a second MUD file, the first MUD file includes a first device description entry and a second device description entry that are of the terminal device, the second MUD file includes the second device description entry of the terminal device, and the first device description entry is different from the second device description entry, the target MUD file includes the second device description entry.

In addition, when a plurality of MUD files of the obtained at least one MUD file include a same device description entry, but MUD information of the same device description entry is different, a process of processing the at least one MUD file to obtain the target MUD file may include, for example, a process of determining MUD information of the device description entry in the target MUD file. In an example, the method 300 may further include: obtaining, based on a target MUD file processing policy corresponding to the terminal device, MUD information that is for describing the first device description entry and that is in the target MUD file. The first device description entry is the same device description entry included in the plurality of MUD files of the obtained at least one MUD file.

The target MUD file processing policy indicates a rule of processing the obtained at least one MUD file to obtain the target MUD file. In one case, in an example, the target MUD file processing policy may include: when the plurality of MUD files are obtained in sequence, using MUD information that is for describing the first device description entry and that is in the latest obtained MUD file as the MUD information that is for describing the first device description entry and that is in the target MUD file. Alternatively, in another case, in an example, the target MUD file processing policy may include: when there is MUD information for describing the first device description entry in the plurality of MUD files, using MUD information that is for describing the first device description entry and that is in a specified MUD file (for example, a MUD file provided by the manufacturer of the terminal device) as the MUD information that is for describing the first device description entry and that is in the target MUD file. Alternatively, in still another case, in an example, the target MUD file processing policy may include: when there is MUD information for describing the first device description entry in the plurality of MUD files, processing the MUD information of the first device description entry by using a specified operation, and using an operation result as the MUD information that is of the first device description entry and that is in the target MUD file. Alternatively, in yet another case, in an example, the target MUD file processing policy may include: when the plurality of MUD files include first MUD information and second MUD information that are for describing the first device description entry, obtaining the first MUD information and the second MUD information, and associating, in the target MUD file, the first MUD information with a first service and the second MUD information with a second service.

It can be learned that according to the method 300 provided in this embodiment of this application, in a scenario in which a plurality of MUD files are distributed on different MUD file servers, when the terminal device accesses a network, the MUD control management device obtains the at least one MUD file from the plurality of MUD file servers based on the target obtaining policy corresponding to the terminal device, so that the MUD file can be obtained from the plurality of MUD file servers in the method 300. In addition, to more accurately constrain the terminal device based on the obtained at least one MUD file, and avoid a constraint conflict, on network behavior of the terminal device, caused by different MUD information of a same device description entry in the plurality of obtained MUD files, the MUD control management device can further process the obtained at least one MUD file to determine the target MUD file, so that the network behavior of the terminal device can be accurately constrained based on the processed target MUD file in the method 300.

It should be noted that, according to the method 300 in this embodiment of this application, for a specific implementation and an achieved effect, refer to related descriptions in embodiments shown in FIG. 3 and FIG. 4.

In addition, this application further provides a MUD control management device 600 as shown in FIG. 6. The MUD control management device 600 includes a transceiver unit 601 and a processing unit 602. The transceiver unit 601 is configured to perform receiving and sending operations implemented by the MUD control management device 30 in the method 100 or the method 200, or the transceiver unit 601 is further configured to perform receiving and sending operations implemented by the MUD control management device in the method 300. The processing unit 602 is configured to perform an operation other than the receiving and sending operations implemented by the MUD control management device 30 in the method 100 or the method 200, or the processing unit 602 is further configured to perform an operation other than the receiving and sending operations implemented by the MUD control management device in the method 300. For example, when the MUD control management device 600 performs the method implemented by the MUD control management device 30 in the method 100, the transceiver unit 601 may be configured to receive a MUD URL request message 1 sent by a terminal device 11, and the processing unit 602 may be configured to obtain at least one MUD file from a plurality of MUD file servers based on a target obtaining policy X corresponding to the terminal device 11.

In addition, an embodiment of this application further provides a manufacturer usage description MUD control management device 700 as shown in FIG. 7. The MUD control management device 700 includes a communication interface 701 and a processor 702. The communication interface 701 includes a first communication interface 701a and a second communication interface 701b. The first communication interface 701a is configured to perform a receiving operation performed by the MUD control management device 30 in the embodiment shown in the method 100 or the method 200, or the first communication interface 701a is also configured to perform a receiving operation performed by the MUD control management device in the embodiment shown in the method 300. The second communication interface 701b is configured to perform a sending operation performed by the MUD control management device 30 in the embodiment shown in the method 100 or the method 200, or the second communication interface 701b is also configured to perform a sending operation performed by the MUD control management device in the embodiment shown in the method 300. The processor 702 is configured to perform an operation other than the receiving operation and the sending operation that are performed by the MUD control management device 30 in the embodiment shown in the method 100 or the method 200, or the processor 702 is also configured to perform an operation other than the receiving operation and the sending operation that are performed by the MUD control management device in the embodiment shown in the method 300. For example, the processor 702 may perform an operation in the embodiment of the method 100: obtaining at least one MUD file from a plurality of MUD file servers based on a target obtaining policy X corresponding to a terminal device 11.

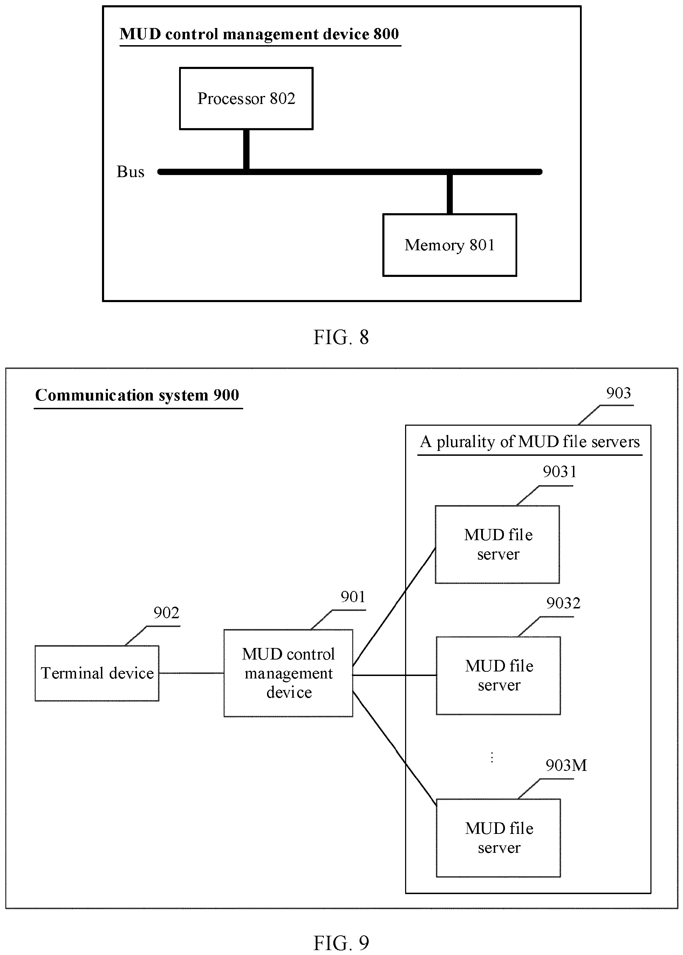

In addition, an embodiment of this application further provides a manufacturer usage description MUD control management device 800 as shown in FIG. 8. The MUD control management device 800 includes a memory 801 and a processor 802 that communicates with the memory 801. The memory 801 includes computer-readable instructions. The processor 802 is configured to execute the computer-readable instructions, so that the MUD control management device 800 performs the method performed on a MUD control management device 30 side in the method 100 or the method 200, or the MUD control management device 800 performs the method performed on a MUD control management device side in the method 300.

It may be understood that, in the foregoing embodiment, the processor may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor may be one processor, or may include a plurality of processors. The memory may include a volatile memory (English: volatile memory), for example, a random access memory (English: random access memory, RAM for short); the memory may further include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). The memory may further include a combination of the foregoing memories. The memory may be one memory, or may include a plurality of memories. In a specific implementation, the memory stores computer-readable instructions, and the computer-readable instructions include a plurality of software modules, for example, a sending module, a processing module, and a receiving module. After executing each software module, the processor may perform a corresponding operation based on an indication of each software module. In this embodiment, an operation performed by a software module is actually an operation performed by the processor based on an indication of the software module. After executing the computer-readable instructions in the memory, the processor may perform, based on indications of the computer-readable instructions, all operations that may be performed by a MUD file obtaining device.

It may be understood that, in the foregoing embodiment, the communication interface 701 of the MUD control management device 700 may be specifically used as the transceiver unit 601 in the MUD control management device 600, to implement data communication between the MUD control management device and another device (for example, a terminal device).

In addition, an embodiment of this application further provides a communication system 900 as shown in FIG. 9. The communication system 900 includes a MUD control management device 901, a terminal device 902, and a plurality of MUD file servers 903. The MUD control management device 901 may be specifically the foregoing MUD control management device 600, MUD control management device 700, or MUD control management device 800. The plurality of MUD file servers 903 may include: a MUD file server 9031, a MUD file server 9032, ..., and a MUD file server 903M (where M is an integer greater than or equal to 2). In an example, the MUD control management device 901 may alternatively be the MUD control management device 30 in the communication system 200 shown in FIG. 2; the terminal device 902 may be any one of the terminal device 11, the terminal device 12, ..., the terminal device 1N in the communication system 200 shown in FIG. 2; and a value of M in the plurality of MUD file servers 903 is 3, to be specific, the plurality of MUD file servers 903 include the MUD file server 9031, the MUD file server 9032, and the MUD file server 9033 that respectively correspond to the MUD file server 40, the MUD file server 50, and the MUD file server 60 in the communication system 200 shown in FIG. 2.

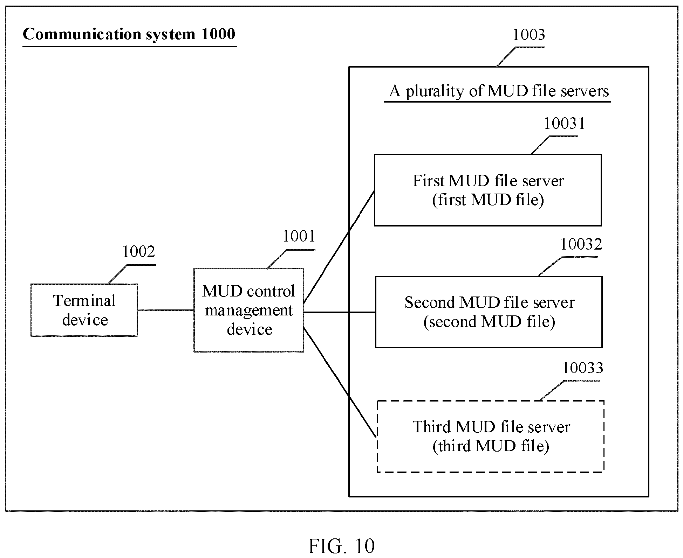

In addition, an embodiment of this application further provides a communication system 1000 as shown in FIG. 10. The communication system 1000 includes a MUD control management device 1001, a terminal device 1002, and a plurality of MUD file servers 1003. The plurality of MUD file servers 1003 include a first MUD file server 10031, and the first MUD file server 10031 is configured to store a first MUD file. The plurality of MUD file servers 1003 include a second MUD file server 10032, and the second MUD file server 10032 is configured to store a second MUD file.

In an example, the plurality of MUD file servers 1003 further include a third MUD file server 10033, and the third MUD file server 10033 is configured to store a third MUD file.

In the communication system 1000, the terminal device 1002 is configured to send a MUD uniform resource locator URL request message to the MUD control management device 1001, and the MUD control management device 1001 is configured to obtain at least one MUD file from the plurality of MUD file servers 1003 based on a target obtaining policy corresponding to the terminal device 1002. For example, the at least one MUD file may include at least one of the following MUD files: the first MUD file, the second MUD file, and the third MUD file.

In some possible implementations, the MUD control management device 1001 stores a first mapping relationship between the target obtaining policy and a MUD URL that is provided by a manufacturer of the terminal device for the terminal device 1002. In this case, the MUD control management device 1001 is further configured to obtain the target obtaining policy based on the first mapping relationship.

In some other possible implementations, the MUD control management device 1001 stores a second mapping relationship between device information of the terminal device 1002 and the target obtaining policy. In this case, the MUD control management device 1001 is further configured to obtain the target obtaining policy based on the second mapping relationship. The device information of the terminal device 1002 includes one or more of the following: a device identifier of the terminal device; a device type of the terminal device; a network segment to which the terminal device belongs; an internet protocol IP address of the terminal device; a media access control MAC address of the terminal device; or information about the manufacturer of the terminal device.

In still some possible implementations, the MUD control management device 1001 is further configured to determine the target obtaining policy from a plurality of preconfigured obtaining policies. The plurality of obtaining policies may be locally configured and stored in the MUD control management device 1001, or may be obtained by the MUD control management device 1001 from another device and stored.

In still some possible implementations, that the MUD control management device 1001 is configured to obtain at least one MUD file from the plurality of MUD file servers 1003 based on a target obtaining policy corresponding to the terminal device 1002 may specifically include: The MUD control management device 1001 determines at least one target MUD file server from the plurality of MUD file servers based on the target obtaining policy. The MUD control management device 1001 obtains the at least one MUD file from the at least one target MUD file server.

The target obtaining policy includes: redirecting, based on the MUD URL provided by the manufacturer of the terminal device 1002 for the terminal device 1002, the first MUD file server 10031 corresponding to the MUD URL to the at least one target MUD file server, and obtaining the MUD file in the at least one target MUD file server, where the plurality of MUD file servers include the first MUD file server 10031, and the at least one target MUD file server includes the second MUD file server 10032; globally updating an obtained MUD file to a MUD file that is latest read from a MUD file server in a sequential reading principle; reading and storing a plurality of MUD files in the plurality of MUD file servers 1003 in sequence; or pre-designating the at least one target MUD file server from the plurality of MUD file servers 1003, and obtaining the MUD file in the at least one target MUD file server.

It should be noted that the at least one target MUD file server may be all of the plurality of MUD file servers 1003, or the at least one target MUD file server may be a part of the plurality of MUD file servers 1003.

In some possible implementations, the MUD control management device 1001 is further configured to process the at least one MUD file to obtain a target MUD file, where the target MUD file is for constraining network behavior of the terminal device 1002.

In an example, the at least one MUD file includes a first MUD file and a second MUD file, the first MUD file includes a first device description entry of the terminal device, the second MUD file includes a second device description entry of the terminal device, the first device description entry is different from the second device description entry, and the target MUD file includes the first device description entry and the second device description entry.

In a possible implementation, the MUD control management device 1001 is further configured to obtain, based on a target MUD file processing policy corresponding to the terminal device 1002, MUD information that is for describing the first device description entry and that is in the target MUD file. The target MUD file processing policy includes: when the plurality of MUD files are obtained in sequence, using MUD information that is for describing the first device description entry and that is in the latest obtained MUD file as the MUD information that is for describing the first device description entry and that is in the target MUD file; when there is MUD information for describing the first device description entry in all the plurality of MUD files, using MUD information that is for describing the first device description entry and that is in a MUD file provided by the manufacturer of the terminal device 1002 as the MUD information that is for describing the first device description entry and that is in the target MUD file; or when the plurality of MUD files include first MUD information and second MUD information that are for describing the first device description entry, obtaining the first MUD information and the second MUD information, and associating, in the target MUD file, the first MUD information with a first service and the second MUD information with a second service.

It can be learned that in the communication system 1000 provided in this embodiment of this application, in a scenario in which a plurality of MUD files are distributed on a plurality of MUD file servers 1003, when the terminal device 1002 accesses a network, the MUD control management device 1001 can obtain the at least one MUD file from the plurality of MUD file servers 1003 based on the target obtaining policy corresponding to the terminal device 1002, so as to obtain the MUD file from the plurality of MUD file servers 1003. In addition, to more accurately constrain the terminal device 1002 based on the obtained at least one MUD file, and avoid a constraint conflict, on network behavior of the terminal device, caused by different MUD information of a same device description entry in a plurality of obtained MUD files, the MUD control management device 1001 can further process the obtained at least one MUD file to determine the target MUD file, so as to accurately constrain the network behavior of the terminal device 1002 based on the processed target MUD file.

It should be noted that functions implemented by the terminal device 1002, the MUD control management device 1001, and the plurality of MUD file servers 1003 in the communication system 1000 in this embodiment of this application may respectively correspond to the MUD control management device 901, the terminal device 902, and the plurality of MUD file servers 903 in the communication system 900 shown in FIG. 9. For related descriptions of specific implementations and achieved effects, refer to related descriptions in embodiments shown in FIG. 3 and FIG. 4.

In addition, an embodiment of this application further provides a computer-readable storage medium. The computer-readable storage medium stores instructions. When the instructions are run on a computer, the computer is enabled to perform the method for obtaining a MUD file in the embodiment shown in the method 100, the method 200, or the method 300.

In addition, an embodiment of this application further provides a computer program product, including a computer program or computer-readable instructions. When the computer program or the computer-readable instructions are run on a computer, the computer is enabled to perform the method for obtaining a MUD file in the embodiment shown in the method 100, the method 200, or the method 300.

From the foregoing descriptions of the implementations, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device such as a router) to perform the methods described in embodiments or some parts of embodiments of this application

Embodiments in this specification are all described in a progressive manner. For same or similar parts in embodiments, refer to each other Each embodiment focuses on a difference from other embodiments Especially, device and system embodiments are basically similar to method embodiments, and therefore are described briefly. For related parts, refer to partial descriptions in the method embodiments The described device and system embodiments are merely examples. The modules described as separate parts may or may not be physically separate, and parts displayed as modules may or may not be physical modules, may be located in one position, or may be distributed on a plurality of network units. Some or all the modules may be selected based on actual requirements to achieve the objectives of the solutions of embodiments. A person of ordinary skill in the art may understand and implement embodiments of the present invention without creative efforts.

The foregoing descriptions are merely preferred implementations of this application, but are not intended to limit the protection scope of this application, which is defined by the claims.

## Claims

1. A method for processing a manufacturer usage description, MUD, file performed by a MUD control management device, wherein the method comprises:
• receiving (S 301) a MUD uniform resource locator, URL, request message from a terminal device;
• obtaining (S 302) at least one MUD file from a plurality of MUD file servers based on a target obtaining policy corresponding to the terminal device, and
• processing the at least one MUD file to obtain a target MUD file, wherein the target MUD file is for constraining network behavior of the terminal device,
∘ **characterized in that**
the at least one MUD file comprises a first MUD file and a second MUD file, the first MUD file comprises a first device description entry of the terminal device, the second MUD file comprises a second device description entry of the terminal device, the first device description entry is different from the second device description entry, and the target MUD file comprises the first device description entry and the second device description entry.

2. The method according to claim 1, wherein the MUD control management device stores a first mapping relationship between the target obtaining policy and a MUD URL that is provided by a manufacturer of the terminal device for the terminal device.

3. The method according to claim 2, wherein the method further comprises:
∘ obtaining the target obtaining policy based on the first mapping relationship.

4. The method according to any one of claims 1 to 3, wherein the MUD control management device stores a second mapping relationship between device information of the terminal device and the target obtaining policy,wherein the method further comprises:
∘ obtaining the target obtaining policy based on the second mapping relationship.

5. The method according to claim 4, wherein the device information of the terminal device comprises one or more of the following:
∘ a device identifier of the terminal device;
∘ a device type of the terminal device;
∘ a network segment to which the terminal device belongs;
∘ an internet protocol, IP, address of the terminal device;
∘ a media access control, MAC, address of the terminal device; or
∘ information about the manufacturer of the terminal device.

6. The method according to any one of claims 1 to 5, wherein the method further comprises:
∘ determining the target obtaining policy from a plurality of preconfigured obtaining policies.

7. The method according to any one of claims 1 to 6, wherein the obtaining the at least one MUD file from the plurality of MUD file servers based on the target obtaining policy corresponding to the terminal device comprises:
∘ determining at least one target MUD file server from the plurality of MUD file servers based on the target obtaining policy; and
∘ obtaining the at least one MUD file from the at least one target MUD file server.

8. The method according to any one of claims 1 to 7, wherein the target obtaining policy comprises:
∘ redirecting, based on the MUD URL provided by the manufacturer of the terminal device for the terminal device, a first MUD file server corresponding to the MUD URL to the at least one target MUD file server, and obtaining the MUD file in the at least one target MUD file server, wherein the plurality of MUD file servers comprise the first MUD file server, and the at least one target MUD file server comprises a second MUD file server;
∘ globally updating an obtained MUD file to a MUD file that is latest read from a MUD file server in a sequential reading principle;
∘ reading and storing a plurality of MUD files in the plurality of MUD file servers in sequence; or
∘ pre-designating the at least one target MUD file server from the plurality of MUD file servers, and obtaining the MUD file in the at least one target MUD file server.

9. The method according to claim 7 or 8, wherein:
∘ the at least one target MUD file server comprises all of the plurality of MUD file servers;
or
∘ the at least one target MUD file server comprises a part of the plurality of MUD file servers.

10. The method according to any one of claims 1 to 9, wherein the method further comprises:
∘ obtaining, based on a target MUD file processing policy corresponding to the terminal device, MUD information that is for describing the first device description entry and that is in the target MUD file.

11. The method according to claim 10, wherein the target MUD file processing policy comprises:
∘ when the plurality of MUD files are obtained in sequence, using MUD information that is for describing the first device description entry and that is in the latest obtained MUD file as the MUD information that is for describing the first device description entry and that is in the target MUD file;
∘ when there is MUD information for describing the first device description entry in all the plurality of MUD files, using MUD information that is for describing the first device description entry and that is in a MUD file provided by the manufacturer of the terminal device as the MUD information that is for describing the first device description entry and that is in the target MUD file; or
∘ when the plurality of MUD files comprise first MUD information and second MUD information that are for describing the first device description entry, obtaining the first MUD information and the second MUD information, and associating, in the target MUD file, the first MUD information with a first service and the second MUD information with a second service.

12. A manufacturer usage description MUD control management device comprising:
∘ a memory, wherein the memory comprises computer-readable instructions; and
∘ a processor, communicating with the memory, wherein the processor is configured to execute the computer-readable instructions, to enable the MUD control management device to perform the method according to any one of claims 1 to 11.

13. A communication system, wherein the communication system comprises the manufacturer usage description, MUD, control management device according to claim 12, a plurality of MUD file servers, and a terminal device.

14. A computer-readable storage medium comprising computer-readable instructions, wherein, when the computer-readable instructions are run on a computer of the MUD control management device of claim 13, the computer is enabled to perform the method according to any one of claims 1 to 11.

## Patentansprüche

1. Verfahren zur Verarbeitung einer Herstellernutzungsbeschreibungs- bzw. MUD-Datei, durchgeführt durch eine MUD-Steuerungsverwaltungsvorrichtung, wobei das Verfahren Folgendes umfasst:
• Empfangen (S 301) einer einheitlichen MUD-Ressourcenzeiger- bzw. MUD-URL-Anforderungsnachricht von einer Endgerätevorrichtung;
• Erhalten (S 302) zumindest einer MUD-Datei von mehreren MUD-Dateiservern basierend auf einer Zielerhalterichtlinie entsprechend der Endgerätevorrichtung, und
• Verarbeiten der zumindest einen MUD-Datei zum Erhalten einer MUD-Zieldatei, wobei die MUD-Zieldatei zum Einschränken von Netzwerkverhalten der Endgerätevorrichtung dient,
∘ **dadurch gekennzeichnet, dass** die zumindest eine MUD-Datei eine erste MUD-Datei und eine zweite MUD-Datei umfasst, wobei die erste MUD-Datei einen ersten Vorrichtungsbeschreibungseintrag der Endgerätevorrichtung umfasst, die zweite MUD-Datei einen zweiten Vorrichtungsbeschreibungseintrag der Endgerätevorrichtung umfasst, der erste Vorrichtungsbeschreibungseintrag verschieden vom zweiten Vorrichtungsbeschreibungseintrag ist und die MUD-Zieldatei den ersten Vorrichtungsbeschreibungseintrag und den zweiten Vorrichtungsbeschreibungseintrag umfasst.

2. Verfahren nach Anspruch 1, wobei die MUD-Steuerungsverwaltungsvorrichtung eine erste Abbildungsbeziehung zwischen der Zielerhalterichtlinie und einem MUD-URL speichert, der durch einen Hersteller der Endgerätevorrichtung für die Endgerätevorrichtung bereitgestellt wird.

3. Verfahren nach Anspruch 2, wobei das Verfahren ferner Folgendes umfasst:
∘ Erhalten der Zielerhalterichtlinie basierend auf der ersten Abbildungsbeziehung.

4. Verfahren nach einem der Ansprüche 1 bis 3, wobei die MUD-Steuerungsverwaltungsvorrichtung eine zweite Abbildungsbeziehung zwischen Vorrichtungsinformationen der Endgerätevorrichtung und der Zielerhalterichtlinie speichert, wobei das Verfahren ferner Folgendes umfasst:
∘ Erhalten der Zielerhalterichtlinie basierend auf der zweiten Abbildungsbeziehung.

5. Verfahren nach Anspruch 4, wobei die Vorrichtungsinformationen der Endgerätevorrichtung eines oder mehrere aus Folgendem umfassen:
∘ eine Vorrichtungskennung der Endgerätevorrichtung;
∘ einen Vorrichtungstyp der Endgerätevorrichtung;
∘ ein Netzwerksegment, zu dem die Endgerätevorrichtung gehört;
∘ eine Internetprotokoll- bzw. IP-Adresse der Endgerätevorrichtung;
∘ eine Medienzugangssteuerungs- bzw. MAC-Adresse der Endgerätevorrichtung; oder
∘ Informationen über den Hersteller der Endgerätevorrichtung.

6. Verfahren nach einem der Ansprüche 1 bis 5, wobei das Verfahren ferner Folgendes umfasst:
∘ Bestimmen der Zielerhalterichtlinie aus mehreren vorkonfigurierten Erhalterichtlinien.

7. Verfahren nach einem der Ansprüche 1 bis 6, wobei das Erhalten der zumindest einen MUD-Datei von den mehreren MUD-Dateiservern basierend auf der Zielerhalterichtlinie entsprechend der Endgerätevorrichtung Folgendes umfasst:
∘ Bestimmen zumindest eines MUD-Zieldateiservers aus den mehreren MUD-Dateiservern basierend auf der Zielerhalterichtlinie; und
∘ Erhalten der zumindest einen MUD-Datei von dem zumindest einen MUD-Zieldateiserver.

8. Verfahren nach einem der Ansprüche 1 bis 7, wobei die Zielerhalterichtlinie Folgendes umfasst:
∘ Umleiten, basierend auf dem durch den Hersteller der Endgerätevorrichtung für die Endgerätevorrichtung bereitgestellten MUD-URL, eines ersten MUD-Dateiservers entsprechend dem MUD-URL auf den zumindest einen MUD-Zieldateiserver, und Erhalten der MUD-Datei in dem zumindest einen MUD-Zieldateiserver, wobei die mehreren MUD-Dateiserver den ersten MUD-Dateiserver umfassen und der zumindest eine MUD-Zieldateiserver einen zweiten MUD-Dateiserver umfasst,
∘ globales Aktualisieren einer erhaltenen MUD-Datei auf eine MUD-Datei, die von einem MUD-Dateiserver nach einem sequenziellen Leseprinzip als letzte gelesen wird;
∘ Lesen und Speichern von mehreren MUD-Dateien in den mehreren MUD-Dateiservern in einer Sequenz; oder
∘ Vorkennzeichnen des zumindest einen MUD-Zieldateiservers aus den mehreren MUD-Dateiservern und Erhalten der MUD-Datei in dem zumindest einen MUD-Zieldateiserver.

9. Verfahren nach Anspruch 7 oder 8, wobei:
∘ der zumindest eine MUD-Zieldateiserver alle der mehreren MUD-Dateiserver umfasst,
oder
∘ der zumindest eine MUD-Zieldateiserver einen Teil der mehreren MUD-Dateiserver umfasst.

10. Verfahren nach einem der Ansprüche 1 bis 9, wobei das Verfahren ferner Folgendes umfasst:
∘ Erhalten, basierend auf einer MUD-Zieldateiverarbeitungsrichtlinie entsprechend der Endgerätevorrichtung, von MUD-Informationen, die zum Beschreiben des ersten Vorrichtungsbeschreibungseintrags dienen und die in der MUD-Zieldatei sind.

11. Verfahren nach Anspruch 10, wobei die MUD-Zieldateiverarbeitungsrichtlinie Folgendes umfasst:
∘ wenn die mehreren MUD-Dateien in einer Sequenz erhalten werden, Verwenden von MUD-Informationen, die zum Beschreiben des ersten Vorrichtungsbeschreibungseintrags dienen und die in der als letzte erhaltenen MUD-Datei sind, als die MUD-Informationen, die zum Beschreiben des ersten Vorrichtungsbeschreibungseintrags dienen und die in der MUD-Zieldatei sind;
∘ wenn es MUD-Informationen zum Beschreiben des ersten Vorrichtungsbeschreibungseintrags in allen der mehreren MUD-Dateien gibt, Verwenden der MUD-Informationen, die zum Beschreiben des ersten Vorrichtungsbeschreibungseintrags dienen und die in einer durch den Hersteller der Endgerätevorrichtung bereitgestellten MUD-Datei sind, als die MUD-Informationen, die zum Beschreiben des ersten Vorrichtungsbeschreibungseintrags dienen und die in der MUD-Zieldatei sind; oder
∘ wenn die mehreren MUD-Dateien erste MUD-Informationen und zweite MUD-Informationen umfassen, die zum Beschreiben des ersten Vorrichtungsbeschreibungseintrags dienen, Erhalten der ersten MUD-Informationen und der zweiten MUD-Informationen und Verknüpfen, in der MUD-Zieldatei, der ersten MUD-Informationen mit einem ersten Dienst und der zweiten MUD-Informationen mit einem zweiten Dienst.

12. Herstellernutzungsbeschreibungs- bzw. MUD-Steuerungsverwaltungsvorrichtung, die Folgendes umfasst:
∘ einen Speicher, wobei der Speicher computerlesbare Anweisungen umfasst; und
∘ einen Prozessor, der mit dem Speicher kommuniziert, wobei der Prozessor ausgelegt ist zum Ausführen der computerlesbaren Anweisungen, um der MUD-Steuerungsverwaltungsvorrichtung zu ermöglichen, das Verfahren nach einem der Ansprüche 1 bis 11 durchzuführen.

13. Kommunikationssystem, wobei das Kommunikationssystem die Herstellemutzungsbeschreibungs- bzw. MUD-Steuerungsverwaltungsvorrichtung nach Anspruch 12, mehrere MUD-Dateiserver und eine Endgerätevorrichtung umfasst.

14. Computerlesbares Speichermedium, umfassend computerlesbare Anweisungen, wobei, wenn die computerlesbaren Anweisungen auf einem Computer der MUD-Steuerungsverwaltungsvorrichtung nach Anspruch 13 ausgeführt werden, dem Computer ermöglicht wird, das Verfahren nach einem der Ansprüche 1 bis 11 durchzuführen.

## Revendications

1. Procédé pour traiter un fichier de description d'utilisation de fabricant, MUD, exécuté par un dispositif de gestion de commande MUD, le procédé comprenant les étapes consistant à :
• recevoir (S 301) un message de demande de localisateur uniforme de ressource, URL, provenant d'un dispositif terminal ;
• obtenir (S 302) au moins un fichier MUD en provenance d'une pluralité de serveurs de fichiers MUD sur la base d'une politique d'obtention cible correspondant au dispositif terminal, et
• traiter l'au moins un fichier MUD pour obtenir un fichier MUD cible, le fichier MUD cible servant à contraindre un comportement de réseau du dispositif terminal,
ο **caractérisé en ce que**
l'au moins un fichier MUD comprend un premier fichier MUD et un deuxième fichier MUD, le premier fichier MUD comprend une première entrée de description de dispositif du dispositif terminal, le deuxième fichier MUD comprend une deuxième entrée de description de dispositif du dispositif terminal, la première entrée de description de dispositif est différente de la deuxième entrée de description de dispositif, et le fichier MUD cible comprend la première entrée de description de dispositif et la deuxième entrée de description de dispositif.

2. Procédé selon la revendication 1, dans lequel le dispositif de gestion de commande MUD stocke une première relation de mappage entre la politique d'obtention cible et un URL MUD qui est fourni par un fabricant du dispositif terminal pour le dispositif terminal.

3. Procédé selon la revendication 2, le procédé comprenant en outre l'étape consistant à :
o obtenir la politique d'obtention cible sur la base de la première relation de mappage.

4. Procédé selon l'une quelconque des revendications 1 à 3, dans lequel le dispositif de gestion de commande MUD stocke une deuxième relation de mappage entre les informations de dispositif du dispositif terminal et la politique d'obtention cible, le procédé comprenant en outre l'étape consistant à :
o obtenir la politique d'obtention cible sur la base de la deuxième relation de mappage.

5. Procédé selon la revendication 4, dans lequel les informations de dispositif du dispositif terminal comprennent un ou plusieurs des éléments suivants :
o un identifiant de dispositif du dispositif terminal ;
o un type de dispositif du dispositif terminal ;
o un segment de réseau auquel le dispositif terminal appartient ;
o une adresse de protocole Internet, IP, du dispositif terminal ;
o une adresse de commande d'accès au support, MAC, du dispositif terminal ;
o des informations au sujet du fabricant du dispositif terminal.

6. Procédé selon l'une quelconque des revendications 1 à 5, le procédé comprenant en outre l'étape consistant à :
o déterminer la politique d'obtention cible parmi une pluralité de politiques d'obtention préalablement configurées.

7. Procédé selon l'une quelconque des revendications 1 à 6, dans lequel l'obtention de l'au moins un fichier MUD en provenance de la pluralité de serveurs de fichiers MUD sur la base de la politique d'obtention cible correspondant au dispositif terminal consiste à :
o déterminer au moins un serveur de fichiers MUD cible parmi la pluralité de serveurs de fichiers MUD sur la base de la politique d'obtention cible :
o obtenir l'au moins un fichier MUD en provenance de l'au moins un serveur de fichiers MUD cible.

8. Procédé selon l'une quelconque des revendications 1 à 7, dans lequel la politique d'obtention cible comprend les étapes consistant à :
o rediriger, sur la base de l'URL MUD fourni par le fabricant du dispositif terminal pour le dispositif terminal, un premier serveur de fichiers MUD correspondant à l'URL MUD vers l'au moins un serveur de fichiers MUD cible, et obtenir le fichier MUD de l'au moins un serveur de fichiers MUD cible, la pluralité de serveurs de fichiers MUD comprenant le premier serveur de fichiers MUD, et l'au moins un serveur de fichiers MUD cible comprenant un deuxième serveur de fichiers MUD ;
o mettre à jour globalement un fichier MUD obtenu en un fichier qui a été lu le plus récemment dans un serveur de fichiers MUD selon un principe de lecture séquentielle ;
o lire et stocker une pluralité de fichiers MUD dans la pluralité de serveurs de fichiers MUD en séquence ; ou
o désigner préalablement l'au moins un serveur de fichiers MUD cible dans la pluralité de serveurs de fichiers MUD, et obtenir le fichier MUD dans l'au moins un serveur de fichiers MUD cible.

9. Procédé selon la revendication 7 ou 8, dans lequel :
o l'au moins un serveur de fichiers MUD cible comprend la totalité de la pluralité de serveurs de fichiers MUD ;
ou
o l'au moins un serveur de fichiers MUD cible comprend une partie de la pluralité de serveurs de fichiers MUD.

10. Procédé selon l'une quelconque des revendications 1 à 9, le procédé comprenant en outre l'étape consistant à :
o obtenir, sur la base d'une politique de traitement de fichier MUD cible correspondant au dispositif terminal, des informations MUD servant à décrire la première entrée de description de dispositif et se trouvant dans le fichier MUD cible.

11. Procédé selon la revendication 10, dans lequel la politique de traitement de fichier MUD cible comprend les étapes consistant à :
o lorsque la pluralité de fichiers MUD est obtenue en séquence, utiliser des informations MUD servant à décrire la première entrée de description de dispositif et se trouvant dans le fichier MUD cible obtenu le plus récemment comme informations MUD servant à décrire la première entrée de description de dispositif et se trouvant dans le fichier MUD cible ;
o lorsqu'il existe des informations MUD servant à décrire la première entrée de description de dispositif dans toute la pluralité de fichiers MUD, utiliser des informations MUD servant à décrire la première entrée de description de dispositif et se trouvant dans un fichier MUD fourni par le fabricant du dispositif terminal comme informations MUD servant à décrire la première entrée de description de dispositif et se trouvant dans le fichier MUD cible ; ou
o lorsque la pluralité de fichiers MUD comprend des premières informations MUD et des deuxièmes informations MUD servant à décrire la première entrée de description de dispositif, obtenir les premières informations MUD et les deuxièmes informations MUD, et associer, dans le fichier MUD cible, les premières informations MUD à un premier service et les deuxièmes informations MUD à un deuxième service.

12. Dispositif de gestion de commande de description d'utilisation de fabricant MUD comprenant :
o une mémoire, la mémoire comprenant des instructions lisibles par ordinateur ; et
o un processeur, en communication avec la mémoire, le processeur étant configuré pour exécuter les instructions lisibles par ordinateur, pour permettre au dispositif de gestion de commande MUD d'exécuter le procédé selon l'une quelconque des revendications 1 à 11.

13. Système de communication, le système de communication comprenant le dispositif de gestion de commande de description d'utilisation de fabricant, MUD, selon la revendication 12, une pluralité de serveurs de fichiers MUD et un dispositif terminal.

14. Support de stockage lisible par ordinateur comprenant des instructions lisibles par ordinateur, dans lequel, lorsque les instructions lisibles par ordinateur sont exécutées sur un ordinateur du dispositif de gestion de commande MUD selon la revendication 13, l'ordinateur est capable d'exécuter le procédé selon l'une quelconque des revendications 1 à 11.
